# EUROPEAN PATENT APPLICATION

(11) **EP 3 859 625 A1**
(43) Date of publication of application: **04.08.2021**
(21) Application number: 19865957.5
(22) Date of filing: 18.09.2019
(51) Int. Cl.: G06Q 10/08

(54) **MERCHANDISE DELIVERY MANAGEMENT SYSTEM AND PROGRAM**

(30) Priority: 25.09.2018 JP 2018178971
(71) Applicant: Fujisawa, Kazunori, Tokyo 160-8486 (JP)
(72) Inventor: Fujisawa, Kazunori, Tokyo 160-8486 (JP)
(74) Representative: Grünecker Patent- und Rechtsanwälte PartG mbB
(86) International application number: PCT/JP2019/036455
(87) International publication number: WO 2020/066765

(57) **Abstract**

To provide a commodity delivery management system capable of delivering a commodity or the like based on flexible customer designation.

A commodity delivery management system including a management server that manages shipment of a commodity to a customer's home from one or more bases, in which the management server includes a front end for performing electronic commerce of the commodity by an order from a customer terminal of the customer's home, and when the commodity is ordered from the customer terminal via the front end, the ordered commodity is shipped from the base, and the commodity is delivered to the customer's home, notifies the customer terminal of a scheduled arrival time of the commodity at the customer's home, and receives an instruction to deliver the commodity after a delay of a predetermined time period from the scheduled arrival time from the customer terminal that has received the notification and manages the instruction.

## Description

### [Technical Field]

The present invention relates to a management system for widely managing shipment or delivery of products or commodities, for example, and more specifically to a commodity delivery management system for flexibly operating shipment or delivery of commodities in a retail industry or an online shopping industry.

### [Background Art]

Conventionally, a technique for performing inventory management of products or commodities, for example, to shorten a transport time period and optimize a transport path of each of the products or the commodities, for example, to improve a transport efficiency has been provided.

For example, a product shipment management system for preventing a quantitative deviation from occurring in an inventory status of multiple kinds of products in a delivery warehouse for each sales area, eliminating a product transport between delivery warehouses as much as possible, and shortening a forwarding time period of transport means to improve a transport efficiency has been proposed (Patent Literature 1).

Specifically, Patent Literature 1 discloses a product shipment management system including inventory management means, order receiving management means, shipment management means, product assignment/allocation means, a terminal apparatus provided in each of a plurality of sales outlets, and a communication line for connecting these, a plurality of delivery warehouses being provided as a whole by providing the delivery warehouse for each area of the sales outlet that sells multiple kinds of products, the multiple kinds of products that have been subjected to make-to-stock production in a production plant being carried into each of the plurality of delivery warehouses, an inventory status of the products carried into each of the plurality of delivery warehouses being stored in the inventory management means, the product assignment/allocation means assigning, when the sales outlet transmits an order for the product received from a customer to the order receiving management means based on the receiving of the order, an inventory product of the kind corresponding to the order for the product depending on the inventory status stored in the inventory management means, and the shipment management means updating a content of the inventory management means, in which the product assignment/allocation means checks whether or not the product ordered by the customer exists in the inventory status stored in the inventory management means, assigns, when an inventory product inventoried beyond a predetermined period exists, the inventory product to the receiving of the order from the customer, sorts, when the inventory product does not exist, inventory products stored by the inventory management means in the delivery warehouse for each area of the sales outlet to which the customer has placed the order by inventory period, and assigns the inventory product inventoried for the longest inventory period to the receiving of the order from the customer.

A distribution management system for setting a substantially optimum conveyance path through actual time information for a load and a number of standby works of an automatic warehouse and an occupancy rate of a conveyance facility has also been proposed (Patent Literature 2).

Specifically, Patent Literature 2 discloses a distribution management system for calculating an estimated conveyance time period from a departure place to an arrival place and selecting an optimum conveyance path, the distribution management system including a conveyance instruction management unit that receives and manages layout information and actual time work information for a load and a number of standby works of an automatic warehouse for each unit link, and an optimum path generation unit that receives the layout information and the actual time work information in a predetermined cycle in the conveyance instruction management unit to calculate estimated conveyance time periods through modeling and selects a conveyance path having the minimum estimated conveyance time period among results as an optimum conveyance path.

A technique for estimating shipment of a parcel, for example, to presumptively ship the parcel to a geographical area of a destination has also been proposed (Patent Literature 3).

Specifically, Patent Literature 3 discloses a system including a first computer system for a company configured to identify a geographic area of a destination to which a parcel including one or a plurality of commodities is shipped to perform final delivery to a delivery address and a second computer system configured to communicate with the first computer system via a network, the system being configured such that the parcel is shipped to the geometrical area of the destination by a moving company other than the company without the delivery address being completely designated at a time point of the shipment, and the first computer system transmits the complete designation of the delivery address to the second computer system, in which the shipment of the parcel includes contracting with the moving company and physically providing the parcel to the moving company, the second computer system is configured to assign the delivery address to the parcel while the parcel is being transported in response to receiving of the complete designation of the delivery address, the parcel to be shipped for which the delivery address has not been completely designated at the time point of the shipment cannot be delivered to any delivery address at the time point of the shipment, and the parcel can be delivered to the delivery address by the moving company as a result of receiving the complete designation of the delivery address.

### [Citation List]

### [Patent Literature]

[Patent Literature 1] Japanese Patent Laid-Open No. 2004-299861
[Patent Literature 2] Japanese Patent Laid-Open No. 2004-244217
[Patent Literature 3] Japanese Patent Application No. 4938682

### [Summary of Invention]

### [Technical Problem]

However, in a recent online shopping industry or the like, competition among short-time delivery services has been activated, and a further system improvement for delivering a commodity in a short time has been requested. Further, as a delivery service has been enriched, a further improvement of a commodity delivery management system capable of flexibly dealing with a demand at the time when a customer is absent at a delivery destination, a fine demand of a delivery time (including a redelivery time) even at the time when a customer is not only absent but also at home, and the like.

### [Solution to Problem]

A commodity delivery management system according to an embodiment of the present invention is a commodity delivery management system including a management server that manages shipment of a commodity to a customer's home from one or more bases, in which the management server includes a front end for performing electronic commerce of the commodity by an order from a customer terminal of the customer's home, and when the commodity is ordered from the customer terminal via the front end, the ordered commodity is shipped from the base, and the commodity is delivered to the customer's home, notifies the customer terminal of a scheduled arrival time of the commodity at the customer's home, and receives an instruction to deliver the commodity after a delay of a predetermined time period from the scheduled arrival time from the customer terminal that has received the notification and manages the instruction.

A commodity delivery management system including a management server that manages shipment of a commodity to a customer's home from one or more bases, in which the management server includes a front end for performing electronic commerce of the commodity by an order from a customer terminal of the customer's home, and when the commodity is ordered from the customer terminal via the front end, the ordered commodity is shipped from the base, and the commodity is delivered to the customer's home, performs processing for either
(1) inquiring of the customer terminal, when a customer is absent and a person other than the customer is present at the customer's home, whether or not the commodity may be delivered to the person other than the customer or
(2) inquiring of the customer terminal whether or not the commodity may be delivered to the customer's home immediately before or when the customer comes home or immediately after the customer comes home, to receive and manage an instruction from the customer terminal that has received either one of the inquiries.

### [Advantageous Effect of Invention]

A commodity delivery management system according to an embodiment of the present invention, for example, produces an effect of being able to flexibly deal with delivery designation when a customer is absent and being able to make fine delivery designation or the like even if the customer is at home.

### [Brief Description of Drawings]

[Figure 1] Figure 1 is an explanatory diagram illustrating a facility and a distribution path in a commodity delivery management system according to an embodiment of the present invention.
[Figure 2] Figure 2 is an explanatory diagram illustrating an entire configuration example of the commodity delivery management system according to the embodiment of the present invention.
[Figure 3] Figure 3 is an explanatory diagram illustrating a functional block configuration of a management server in the commodity delivery management system according to the embodiment of the present invention.
[Figure 4] Figure 4 is an explanatory diagram illustrating an external configuration example of an information processing apparatus (user terminal) in the commodity delivery management system according to the embodiment of the present invention.
[Figure 5] Figure 5 is an explanatory diagram illustrating a functional block configuration of hardware constituting the information processing apparatus according to the embodiment of the present invention.
[Figure 6] Figure 6 is a flowchart illustrating a processing flow in the commodity delivery management system according to the embodiment of the present invention.
[Figure 7] Figure 7 is an explanatory diagram illustrating a concept of extraction logic generation processing in the commodity delivery management system according to the embodiment of the present invention.
[Figure 8] Figure 8 is a flowchart illustrating a flow of stock commodity registration processing or update processing in the commodity delivery management system according to the embodiment of the present invention.
[Figure 9] Figure 9 is an explanatory diagram illustrating a display example of an information processing apparatus (user or customer terminal) in the commodity delivery management system according to the embodiment of the present invention.
[Figure 10] Figure 10 is an explanatory diagram illustrating an analysis and distribution model in the commodity delivery management system according to the embodiment of the present invention.
[Figure 11] Figure 11 is an explanatory diagram illustrating a data structure and a display example in the information processing apparatus in the commodity delivery management system according to the embodiment of the present invention.
[Figure 12] Figure 12 is an explanatory diagram illustrating a display example of the information processing apparatus (user or customer terminal) in the commodity delivery management system according to the embodiment of the present invention.
[Figure 13] Figure 13 is an explanatory diagram illustrating a display example of the information processing apparatus (user or customer terminal) in the commodity delivery management system according to the embodiment of the present invention.
[Figure 14] Figure 14 is an explanatory diagram illustrating a display example of the information processing apparatus (user or customer terminal) in the commodity delivery management system according to the embodiment of the present invention.
[Figure 15] Figure 15 is a flowchart illustrating a processing operation flow in the commodity delivery management system according to the embodiment of the present invention.
[Figure 16] Figure 16 is a flowchart illustrating a processing operation flow in the commodity delivery management system according to the embodiment of the present invention.
[Figure 17] Figure 17 is an explanatory diagram illustrating a display example of the information processing apparatus (user or customer terminal) in the commodity delivery management system according to the embodiment of the present invention.
[Figure 18] Figure 18 is an explanatory diagram illustrating a display example of the information processing apparatus (user or customer terminal) in the commodity delivery management system according to the embodiment of the present invention.
[Figure 19] Figure 19 is an explanatory diagram illustrating a display example of the information processing apparatus (user or customer terminal) in the commodity delivery management system according to the embodiment of the present invention.
[Figure 20] Figure 20 is an explanatory diagram illustrating a display example of the information processing apparatus (user or customer terminal) in the commodity delivery management system according to the embodiment of the present invention.
[Figure 21] Figure 21 is an explanatory diagram illustrating a display example of the information processing apparatus (user or customer terminal) in the commodity delivery management system according to the embodiment of the present invention.
[Figure 22] Figure 22 is an explanatory diagram illustrating a display example of the information processing apparatus (user or customer terminal) in the commodity delivery management system according to the embodiment of the present invention.
[Figure 23] Figure 23 is an explanatory diagram illustrating a display example of the information processing apparatus (user or customer terminal) in the commodity delivery management system according to the embodiment of the present invention.

### [Description of Embodiment]

A commodity delivery management system or the like according to an embodiment of the present invention will be described in detail below with reference to the drawings. Although in the following embodiment of the present invention, a delivery target is a commodity for convenience of description, the present invention is not limited to this, but is also applicable to a baggage as long as it is not unreasonable in view of the spirit of the invention.

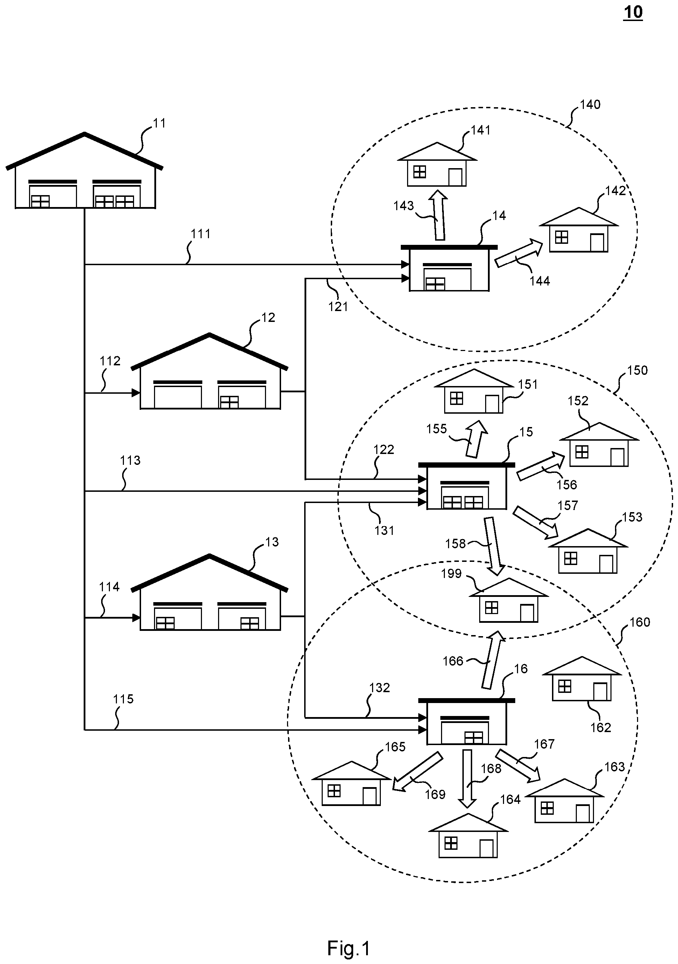

Figure 1 schematically illustrates a facility and a distribution path, for example, in a commodity delivery management system according to an embodiment of the present invention. In the same drawing, a commodity delivery management system 10 viewed from the facility and the distribution path generally includes distribution centers 11 to 13 and nearest bases 14 to 16, and constitutes a part of a large distribution network that distributes commodities or the like to customer's homes 141 to 142, 151 to 153, 162 to 165, and 199 via paths 143 to 144, 155 to 158, and 166 to 169.

The respective numbers of the distribution centers 11 to 13 and the nearest bases 14 to 16 are not limited to the numbers, but can include any number of centers and any number of distribution bases. For easy understanding, the present invention will be described below along a model illustrated in Figure 1 for convenience.

### [Basic Concept Example of Present Invention: Distribution Center and Nearest Base]

Although the present invention is not limited to this, a feature example of the facility in the commodity distribution management system according to the embodiment of the present invention includes at least the two types of facilities. As a basic concept example, the nearest base according to the embodiment of the present invention is provided as a geographic base that can deliver commodities to the customer's home within a predetermined time period in addition to a distribution center as a conventional distribution base.

Specifically, the nearest base is a delivery base specific to the present invention provided such that commodities or the like can be delivered to a customer in a short time, and a distribution network provided with the nearest base constitutes one of basic concept examples of the present invention.

As illustrated in Figure 1, the distribution centers may respectively have different roles. For example, in the same drawing, the distribution center 12 delivers commodities or the like to the nearest bases 14 and 15, respectively, via the paths 121 and 122, and the distribution center 13 delivers commodities or the like to the nearest bases 15 and 16, respectively, via the paths 131 and 132. On the other hand, the distribution center 11 delivers commodities or the like to the other distribution centers 12 and 13, respectively, via the paths 112 and 114. In addition, the distribution center 11 also plays a role of delivering commodities or the like to the nearest bases 14, 15, and 16, respectively, via the paths 111, 113, and 115. For example, commodities or the like are generally supplied to the nearest base 14 from the geographically near distribution center 12. However, if there is no inventory in the distribution center 12, commodities or the like may be supplied to the nearest base 14 from the distribution center 11.

A path for directly delivering commodities or the like to the customer's home from each of the distribution centers 11 to 13 may be provided, which is not illustrated in Figure 1 (which is not an essential part in the present invention, and thus is not illustrated).

In Figure 1, a nearest area 140 represents an area to which commodities or the like can be delivered within a predetermined time period (e.g., 30 minutes, one hour, etc., which may be several hours) from the nearest base 14, and the same area schematically includes the customer's homes 141 and 142.

Similarly, a nearest area 150 represents an area to which commodities or the like can be delivered within a predetermined time period (e.g., 30 minutes, one hour, etc., which may be several hours) from the nearest base 15, and the same area schematically includes the customer's homes 151, 152, 153, and 199. A nearest area 160 represents an area to which commodities or the like can be delivered within a predetermined time period (e.g., 30 minutes, one hour, etc., which may be several hours) from the nearest base 16, and the same area schematically includes the customer's homes 162, 163, 164, 165, and 199.

In the same drawing, the customer's home 199 is also included in both the nearest area 150 and the nearest area 160 by way of example. This means that commodities or the like can be delivered to the customer's home 199 within a predetermined time period from both the nearest base 15 and the nearest base 16 (e.g., commodities or the like can be delivered in 35 minutes from the nearest base 15 to the customer's home 199, and commodities or the like can be delivered in 40 minutes from the nearest base 16 to the customer's home 199).

Although the present invention is not limited to this, commodities to be handled can be provided with two types of sections "stock commodities" and "non-stock commodities" in a commodity distribution management system according to the embodiment of the present invention. The commodity sections are separated depending on whether a routine demand from a customer within a nearest area of a nearest base is high or low. The commodities each having a high routine demand from the customer within the nearest area of the nearest base are respectively partitioned as the stock commodities, and are managed such that the predetermined number of commodities are always available in the nearest base even if not ordered by the customer.

On the other hand, the non-stock commodities are delivered to the nearest base from the distribution center and are delivered to a customer's home in the nearest area at a time point where they are ordered by the customer (or may be directly delivered to the customer's home from the distribution center).

"Stock commodities" and "non-stock commodities" are selected on a system for each nearest area depending on whether a routine demand within the nearest area is high or low, and thus are not uniformly determined depending on a commodity section (a household electric appliance, a book, a cosmetic product, etc.). However, as a general tendency, household electric appliances such as a refrigerator and a large-sized television may be partitioned into the non-stock commodities, and daily necessaries such as shampoo and toilet paper may be partitioned into the stock commodities. The stock commodities geographically and temporally vary depending on an area or a situation such as a situation immediately after an annual event or an earthquake.

"Stock commodities" and "non-stock commodities" in the present specification are defined below.

Stock commodities: The stock commodities are commodities that have been each repeatedly demanded in a short period from a customer within a nearest area. Examples include daily necessaries and consumables. In the embodiment of the present invention, the stock commodities are commodities to be managed such that the predetermined number of commodities are always stocked in a nearest base.

Non-stock commodities: The non-stock commodities are commodities other than the stock commodities. Typically, the non-stock commodities are commodities delivered from a distribution center at a time point where they are ordered by a customer. Examples include a high-quality commodity such as a large-sized household electric appliance or a camera.

The present invention does not necessarily need the above-described commodity sections, and is not limited to these even if "stock commodities" and "non-stock commodities" are separately described in the following embodiment (may be alternatively referred to as normal commodities).

### [Distribution Management]

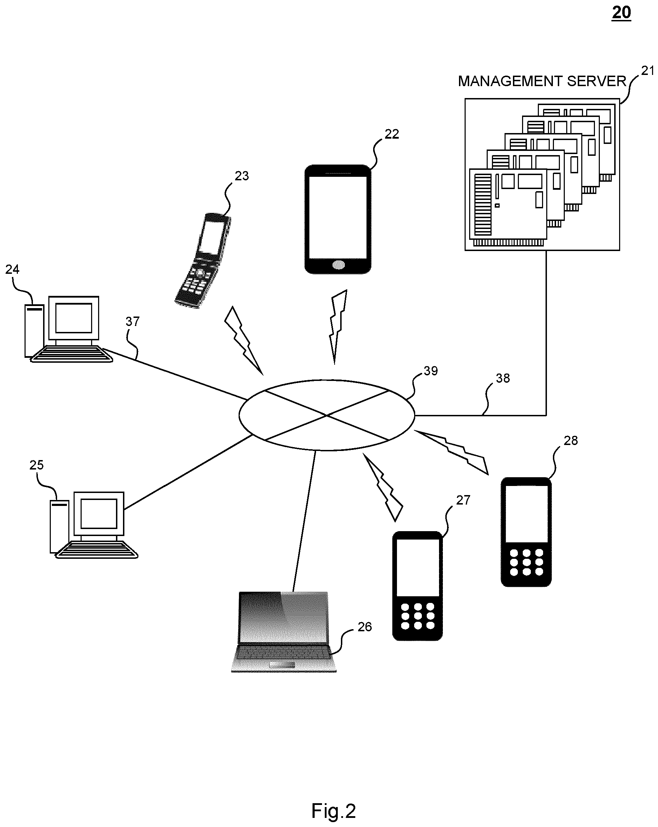

In the above description, a portion described as "a commodity or the like can be delivered within a predetermined time period from a nearest base" or "when there is no inventory", for example, can be judged by management of a time period (estimated time period) required for delivery and an inventory quantity of commodities or the like at a base. Although an entire configuration example of the commodity delivery management system according to the embodiment of the present invention will be described below with reference to Figure 2, a management server in the commodity delivery management system according to the embodiment of the present invention, for example, is installed in any one of distribution centers or nearest bases in Figure 1 or an office building or the like not illustrated, and the management server is connected to each of the centers and each of the bases via an information terminal and a network, and manages an inventory status of commodities or the like and respective numbers of commodities to be loaded and unloaded in each of the bases or the like and a delivery status between the bases or to a destination are managed from moment to moment. Further, from these actual results, for example, a delivery time period between the bases or to the destination is calculated, and is sequentially updated and managed.

Therefore, each of the paths illustrated in Figure 1 is not always only one route. Although the path from the distribution center 11 to the nearest base 14 is managed as 111 on the system, for example, one or more routes other than the path can also be stored and managed as an alternative route. Although the path from the nearest base 14 to the customer's home 141 is also managed as 143 on the system in the same drawing, one or more alternative routes can also be stored and managed.

The alternative routes are alternatively adopted depending on a traffic condition of the moment, and the adopted alternative route can be designated for a specific delivery facility (base) or delivery means (delivery vehicle).

### [Sales Management]

In the commodity delivery management system according to the embodiment of the present invention, sales management of commodities or the like is also performed. The commodity delivery management system according to the embodiment of the present invention also operates simultaneously with a store POS cash register or a mail-order sales (electronic commerce) system not illustrated, and manages actual sales results in a store and actual sales results through mail order for each customer. As a database therefor, databases (D1) to (D8), as described below, are included in the management server in the embodiment. References and update requests from various terminals can be made.

### (D1) Customer management database

A customer management database is a database in which items relating to a customer are registered, in which personal information such as a name, an address, and a telephone number of the customer and appended information such as held points and a nearest base are registered.

### (D2) Commodity management database

A commodity management database is a database in which items relating to a commodity are registered, in which a commodity name, a commodity code associated with a JAN code, and the like are registered and managed.

### (D3) Inventory management database

An inventory management database is a database for managing a commodity inventory for each base, and appropriately cooperates with the commodity management database, and a required table is derived and extracted.

### (D4) Warehouse management database

A warehouse management database is a database for managing a commodity inventory to be stored in a warehouse in a distribution center or the like.

### (D5) Sales management database

A sales management database is an actual result management database relating to sold commodities for each base or store.

### (D6) Stock candidate commodity database (or table)

A stock candidate commodity database is a database derived and extracted from the commodity management database and the inventory management database, and a specific extraction example will be described below.

### (D7) Stock desire commodity database (or table)

A stock desire commodity database is a stock desire commodity database for each customer and for each nearest base derived from the commodity management database, the inventory management database, and the customer management database. A specific example of extraction will be described below.

### (D8) Stock commodity database (or table) for each nearest base (for each customer)

A stock commodity database is a database for performing stock commodity inventory management for each nearest base derived from the commodity management database, the inventory management database, and the customer management database. A specific extraction example will be described below.

### [Roles of Nearest Base]

In a nearest base, a distribution system including the commodity delivery management system according to the embodiment of the present invention plays the following roles (system operations and works by workers such as a staff within the base are collectively listed).
(1) Storage and sorting of target stock commodities and update management of the target stock commodities.
(2) Delivery processing to be performed when the target stock commodity is ordered by a customer within a nearest area (picking and destination labeling of the ordered commodity).
(3) Temporary storage and delivery to a customer's home to be performed when a non-stock commodity ordered by the customer within the nearest area is delivered from a distribution center (typically, the non-stock commodity is delivered to a nearest base with destination labeling completed).
(4) Together packaging delivery of the non-stock commodity and the stock commodity ordered by the customer within the nearest area (if the non-stock commodity and the stock commodity are together packaged and delivered, together packaging work and destination labeling work are performed in the nearest base).
(5) Redelivery to be performed when the customer within the nearest area was absent, although the non-stock commodity and the stock commodity have been delivered to the customer.
(6) Simultaneous delivery of a stock commodity additionally ordered at the time of the redelivery in the above item (5).

In the embodiment of the present invention, delivery from the distribution center to the nearest base is performed as a business operation within the same business operator, and is not entrusted to another home delivery business operator or the like. For example, the business operator delivers target commodities approximately several times per day by delivery of its own within the business.

Figure 2 is an entire configuration example of the commodity delivery management system according to the embodiment of the present invention.

As illustrated in Figure 2, a commodity delivery management system 20 includes, as a configuration in the one embodiment, a management server 21, and various types of information processing apparatuses used by a user (customer), a deliverer, or the like (in the same drawing, a portable information terminal or a tablet terminal 22, a mobile phone 23, PCs 24 to 26, and POS terminals 27 and 28 are illustrated by way of example, which may be hereinafter generically referred to as "various types of terminals" or also merely referred to as "terminals"). The management server 21 and the various types of terminals in the commodity delivery management system 20 are connected to be mutually communicable via a dedicated line and a public line such as the Internet (37 to 39 as a wired line), as illustrated in Figure 2. The line may be wired or wireless. If the line is wireless, the portable information terminal or the tablet terminal 22, the mobile phone 23, and the POS terminals 27 and 28 wirelessly enter the Internet 39 via a base station, an access point, or the like not illustrated, and is further connected to be mutually communicable with the management server 21 via the line 38.

The access point means a radio for mutually connecting wireless terminals such as a PC and a smartphone and connecting the wireless terminals to another network. Typically, the access point is a device that operates with a communication protocol of a first layer (physical layer) and a second layer (data link layer) in an OSI reference model.

The mobile phone, the portable information terminal, or the tablet at the time point of filing of the present application may have a similar processing capability (a communication processing speed, an image processing capability, etc.) as that of the personal computer (PC), and should be said as a small computer.

A program or software required for the embodiment of the present invention is generally installed or stored in an HDD, an SSD, or the like in a storage unit in the PC or the portable information terminal. The program or the software is read into a memory in the storage unit, as needed, as a software module of its whole or part and is operated and executed in a CPU when executed.

Alternatively, a browser-based computer or portable information terminal can also be adopted. In this case, a program is distributed to the terminal from another server or computer, as needed, and is executed by a browser on the terminal.

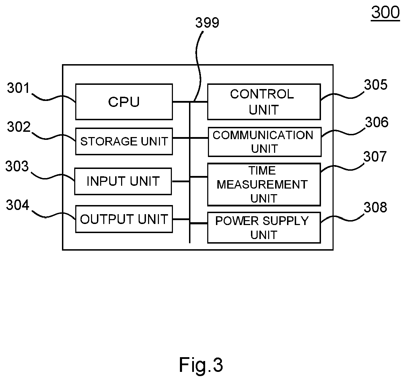

A hardware configuration of the management server 21 can basically adopt a PC (described below with reference to Figure 3, as a precaution). Although the present invention is not limited to this, the management server 21 can also have a configuration suitable for processing of large-scaled data by operating a plurality of PCs (several tens to several tens of thousands as an example) in raising a hardware specification, as needed.

Figure 3 is a functional block diagram of a management server in the commodity delivery management system according to the embodiment of the present invention. By way of example, an operation of the management server is implemented by each operation of hardware described below and a cooperation operation between software and the hardware.

In Figure 3, a management server 300 as an entire hardware block generally includes a CPU 301 for performing various types of comparison and operation processing, a storage unit 302 such as a RAM, a ROM, and a flash memory, an input unit 303 such as a keyboard and a pointing device, an output unit 304 such as a display and a speaker, a control unit 305 for various types of signal control, a communication (interface) unit 306 (may be either wireless or wired), a time measurement unit 307 for measuring time or the like, and a power supply unit 308.

The modules are appropriately connected to one another via a communication bus and a power feed line (the lines are collectively represented as a wire connection 399 appropriately divided for convenience in Figure 3).

A program or software to be executed on the management server 300 required for the embodiment of the present invention is generally installed or stored in a hard disk drive, an SSD (solid state drive), a flash memory, and the like constituting the storage unit 302. The program or the software is read into a memory in the storage unit 302, as needed, as a software module of its whole or part and is operated and executed in the CPU 301 when executed.

The operation and the execution need not necessarily be performed in a central processing unit such as the CPU 301, and can also be performed using an auxiliary operation apparatus such as a digital signal processor (DSP) not illustrated.

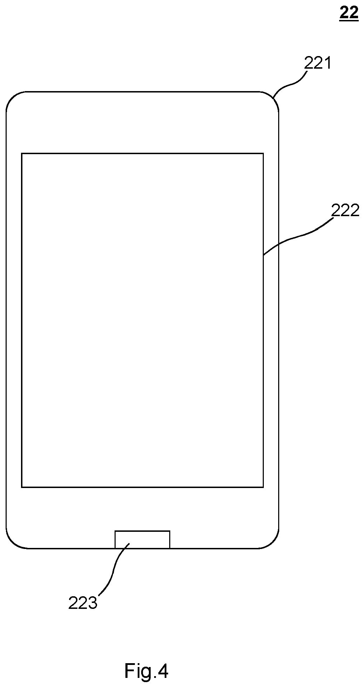

Figure 4 illustrates an external configuration of the tablet terminal 22 as the information processing apparatus in the commodity delivery management system according to the embodiment of the present invention. In Figure 4, the information processing apparatus (tablet terminal) 22 includes a housing unit 221, a display 222, and a hardware button 223 provided in a lower center portion of the housing 221. The display 222 is typically composed of a liquid crystal display (LCD) or the like, and can display various information such as characters, a still image, and a moving image. A menu button and a software keyboard are displayed on the display 222, and are touched with a finger or a touch pen (not illustrated), for example, to issue an instruction (command) to the tablet terminal 22. Although the above-described hardware button 223 is not an essential constituent element in this respect, the hardware button 223 is mounted as a button having a predetermined function for convenience of description of the present invention. Needless to say, the hardware button 223 can also be replaced with a menu button displayed on a part of the display 222.

The display 222 includes a multi-touch input panel, and touch input position coordinates on the touch input panel are transmitted to a processing system (CPU) of the tablet terminal 22 via an input device interface (not illustrated) and are processed. The multi-touch input panel is configured to be able to simultaneously sense a plurality of contact points for the panel. The detection (sensor) can be implemented using various methods, and is not necessarily limited to a contact sensor. For example, an instruction point for the panel can also be extracted using an optical sensor. Further, as the sensor, a capacitive sensor that senses contact of a person's skin can also be used in addition to a contact type sensor and an optical sensor.

The tablet terminal 22 can also include a microphone and a speaker, which do not appear in Figure 4. In this case, a user's voice picked from the microphone can be determined and set as an input command. Further, a camera device such as a CMOS can also be mounted on a back surface of the tablet terminal 22, for example, which does not appear in Figure 4.

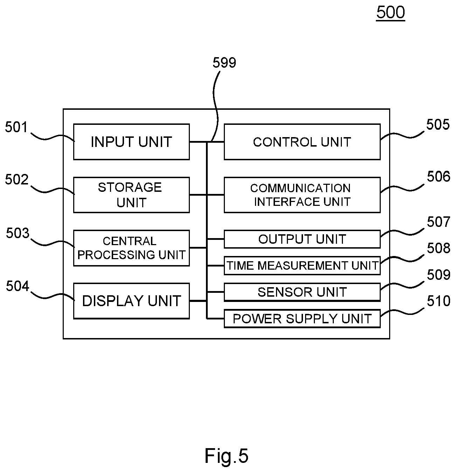

Figure 5 illustrates a functional block diagram of hardware constituting the tablet terminal 22 according to the embodiment of the present invention. An operation of the tablet terminal 22 is implemented by each operation of the hardware described below and a cooperation operation between software and the hardware.

In Figure 5, a tablet terminal 500 as an entire hardware block generally includes an input unit 501 composed of a multi-touch input panel, a microphone, and the like provided in the hardware button 223 and the display 222 in Figure 4, a storage unit 502 composed of a hard disk, a RAM, and/or a ROM for storing a program, data, and the like, a central processing unit 503 composed of a CPU that performs various numerical calculations and logic operations using the program, a display unit 504 composed of the display 222 and the like, a control unit 505 for controlling a chip, an electric system, and the like, a communication interface unit 506 composed of a slot for accessing the Internet, a port for performing optical communication, and a communication interface, an output unit 507 such as a speaker, a vibration, and an infrared projector, a time measurement unit 508 for measuring time or the like, a sensor unit 509 composed of an image sensor such as a CMOS, an infrared sensor, an inertial sensor, and the like, and a power supply unit 510 for supplying power to each of modules in an apparatus, and the modules are appropriately connected, as needed, to one another via a communication bus and a power feed line (the lines are collectively represented as a wire connection 599 appropriately divided for convenience in Figure 5).

The sensor unit 509 may include a GPS sensor module for identifying a position of the tablet terminal 500 (22). Signals respectively detected by the image sensor such as a CMOS, the infrared sensor, and the like constituting the sensor unit 509 can be processed as input information in the input unit 501.

A program or software to be executed on the tablet terminal 500 required for the embodiment of the present invention is generally installed or stored in a hard disk drive, an SSD (solid state drive), a flash memory, and the like constituting the storage unit 502. The program or the software is read into a memory in the storage unit 502, as needed, as a software module of its whole or part and is operated and executed in the CPU 503 when executed.

The operation and the execution need not necessarily be performed in the central processing unit 503 such as the CPU, and can also be performed using an auxiliary operation device such as a digital signal processor (DSP) not illustrated.

### [Determination of Stock Commodities to be Stocked in Nearest Base]

Although the present invention is not limited to this, stock commodities to be stocked (inventoried) in a nearest base can be judged or determined in the commodity distribution management system according to the embodiment of the present invention. Here, details thereof will be described.

Although the stock commodities are selected on the system for each nearest area depending on whether a routine demand within the nearest area is high or low, as described above, more specifically, the stock commodities are selected in a flow of (1) selecting stock candidate commodities, (2) excluding the stock candidate commodities that are production-ended or sale-ended from among the stock candidate commodities, and (3-A) further accepting a stock and registration request by a customer himself or herself from among the stock candidate commodities or (3-B) performing stock and registration by automatic determination.

Particularly, examples of the selection of the stock candidate commodities in the above-described item (1) include (1-A) selection of stock candidate commodities by analyzing actual sales result data and (1-B) selection of stock candidate commodities based on commodity management information. The foregoing will be specifically described in order below.

### 1-A. Processing for selecting stock candidate commodities by analyzing actual sales result data

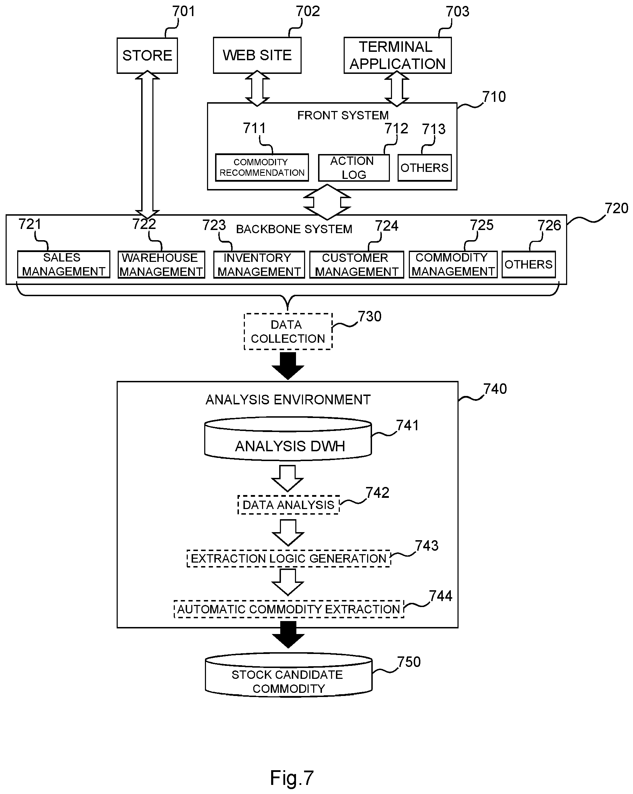

The processing for selecting stock candidate commodities is performed by analyzing actual sales result data stored in the past (recorded in a sales management DB), setting an automatic extraction logic for extracting commodities that are repeatedly demanded from a customer (a predetermined number of orders are placed from a customer within a predetermined period), and selecting the stock candidate commodities in a nearest base based on the automatic extraction logic (a concept of extraction logic generation processing will be described below with reference to Figure 7).

### 1-B. Processing for selecting stock candidate commodities by commodity management information

The processing for selecting stock candidate commodities is performed by extracting books in series and uncompleted and software commodities versioned up among the commodities purchased in the past (recorded in the sales management DB) by a customer. Commodities in series and respective version numbers of the commodities are recorded in the commodity management DB.

### 2. Processing for excluding candidate commodities that are production-ended or sale-ended

The exclusion processing is processing for excluding a candidate commodity an inventory status of which is in a supply impossible state such as "end of production" or "end of sales" from candidates. Such information is recorded for each commodity in the commodity management DB, and is updated every time the specific commodity is production-ended or sale-ended.

Even a candidate commodity that is indicated as sale-ended in the inventory status, for example, but can be ordered from a manufacturer or the like (such information can also be managed for each commodity in the commodity management DB) can also be controlled not to be excluded.

### 3-A. Processing for accepting stock and registration request by customer himself or herself

The registration processing is to stock and register stock candidate commodities by providing candidate commodity information extracted in the items up to the above-described item 2 onto a customer terminal and causing a customer to select the candidate commodity information. Typically, the customer selects, from among the stock candidate commodities, the commodity that is desired to be delivered in a short time (e.g., 30 minutes or one hour) when ordered via the customer terminal, and stocks and registers the commodity.

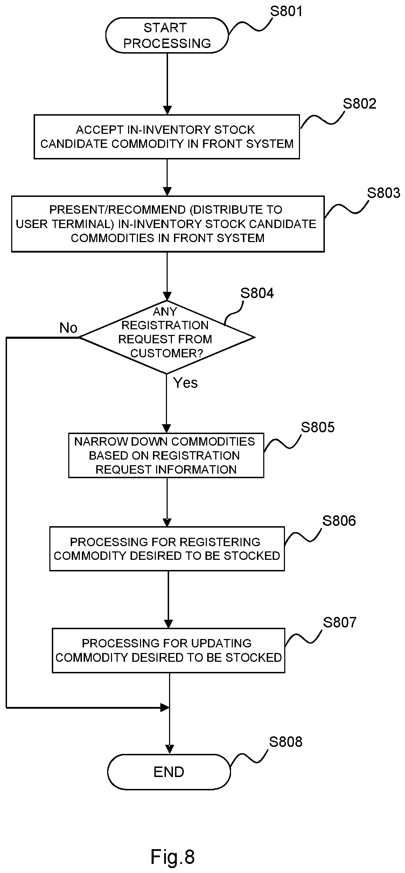

Although the registration processing will be further described in detail with reference to Figure 8 to Figure 9, the stock candidate commodities are stocked and registered by registering the customer terminal. Thus, different stock commodity groups are formed for each nearest area, and are managed in the system.

### 3-B. Stock and registration processing by automatic determination

The registration processing is to pick up commodities that are in high demand and commodities that are high in repeat purchase rate from the viewpoint of a commodity delivery management system operator and automatically register the commodities in stock commodities even if the customer does not stock and register the commodities. Criteria of the high demand and criteria of the repeat purchase rate can be appropriately set by the system operator. The registration processing can be flexibly operated by performing registration common to all nearest bases or performing registration different for each area or for each nearest area, for example.

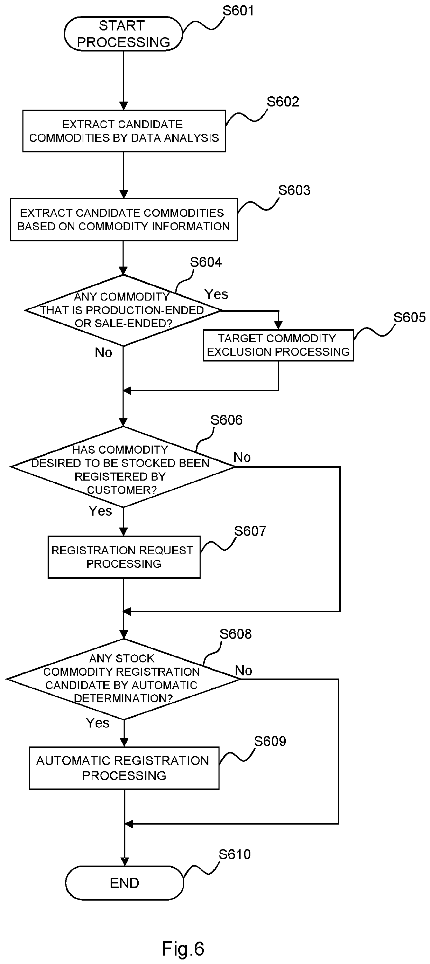

Figure 6 illustrates a flow of determination processing or registration processing of stock commodities to be stocked in a nearest base described above. If processing is started in step S601, stock candidate commodities are extracted by data analysis in step S602. Specifically, processing is performed by referring to the sale management DB or the like in the management server 21. Then, the processing proceeds to step S603. In step S603, the stock candidate commodities are extracted based on commodity information. Specifically, processing is performed by referring to the commodity management DB or the like in the management server 21.

In step S604, it is judged whether or not among the candidate commodities extracted in step S602 and step S603, there is any candidate commodity being production-ended or sale-ended. If the answer is Yes, the processing proceeds to step S605. In step S605, processing for excluding the candidate commodity is performed. Specifically, processing is performed by referring to the commodity management DB or the like in the management server 21. If it is judged that a candidate commodity can be ordered from a manufacturer or the like by referring to a flag separately managed by the commodity management DB or the like, for example, the candidate commodity can also be prevented from being excluded (It is judged that the answer is No in step S604) .

In step S606, it is judged whether or not processing for registering a commodity desired to be stocked by the customer has been performed for the stock candidate commodities presented at a terminal of the customer. If the registration processing has not been performed, the processing proceeds to step S608. However, if the processing for registering the commodity desired to be stocked by the customer has been performed (Yes in step S606), the processing proceeds to step S607. In step S607, processing for stocking and registering the designated stock candidate commodities is performed. Specifically, in the management server 21, the stock registration processing is performed by updating the commodity management DB or the like or updating the stock commodity management table for each nearest base extracted from the commodity management DB.

Then, in step S608, automatic determination processing set from the viewpoint of the commodity delivery management system operator, and it is judged whether or not there are candidate commodities to be stocked and registered in light of such automatic determination criteria. If the answer is Yes in step S608, the processing proceeds to step S609. In step S609, processing for stocking and registering the stock candidate commodities satisfying the automatic determination criteria is performed. Specifically, in the management server 21, the stock and registration processing is performed by updating the commodity management DB or the like in the management server 21 or updating the stock commodity management table for each nearest base extracted from the commodity management DB.

If the answer is No in step S608, or if step S609 ends, the processing proceeds to step S610. In step S610, processing ends as a flow of processing for determining or processing for registering the stock commodities to be stocked in the nearest base.

Figure 7 illustrates a concept of extraction logic generation processing for selecting candidate commodities to be stocked in a nearest base in the commodity delivery management system according to the embodiment of the present invention.

The commodity delivery management system according to the embodiment of the present invention in Figure 7 appears in a front system 710, a backbone system 720, an analysis environment 740, and a stock candidate commodity DB or table 750. In the same drawing, the backbone system 720 is accessed by a (POS register of) a store 701 and the front system 710 to a WEB site 702 directed toward a customer terminal and a terminal application 703 such as a customer terminal. (The POS register of) the store 701 exchanges information such as commodities sold in a real store and commodities required to be delivered to the real store with the backbone system 720. The WEB site 702 and the terminal application 703 via the front system 710 exchange information about commodities ordered or sold through electronic commerce via the Internet or the like with the backbone system 720.

The front system 710 is a software module that performs a transaction or a procedural mediation between the backbone system 720 and the WEB site 702 directed toward the customer terminal and the terminal application 703 such as the customer terminal in the commodity delivery management system according to the embodiment of the present invention, and operates on the management server 21 or another server. The front system 710 includes as its sub-modules a commodity recommendation logic 711 that recommends a commodity to the customer terminal or the like, an action log logic 712 that tracks a commodity to be browsed or ordered, for example, from the customer terminal, and a logic 713 composed of another processing system.

The backbone system 720 includes a sales management processing system 721 including a sales management DB, a warehouse management processing system 722 including a warehouse management DB, an inventory management processing system 723 including an inventory management DB, a customer management processing system 724 including a customer management DB, a commodity management processing system 725 including a commodity management DB, and other processing systems 726 including other DBs.

In Figure 7, the extraction logic for selecting the candidate commodities to be stocked in the nearest base is generated in the analysis environment 740 constructed within the commodity management server 21 as an example. A procedure of the generation is as follows. That is, as illustrated in the same drawing, data collection (730) is performed from the backbone system 720 that has been accessed by (the POS register of) the store 701 and the front system 710 to the WEB site 702 directed toward the customer terminal and the terminal application 703 such as the customer terminal and has updated and managed commodity information, sales information, and the like, and data is fed into a data warehouse in the analysis environment 740. That is, stock candidate commodity selection processing is automatically performed (744) by a commodity extraction logic (743) generated by collecting customer information, commodity information, purchase information (sales information), browsing information, and the like in a data warehouse for analysis 741 and analyzing stored data (742).

In the data analysis 742, various data analyses are performed for the data warehouse 741. Although the present invention is not limited to these, the data stored in the data warehouse are a large amount of integration business data generally rearranged in a time series, and association among various items is analyzed. Association among elements that have not been clear in conventional simple aggregation, for example, "men in their 40s and 50s who buy fitness goods in the weekend may together buy associated books" and "daily necessaries such as a waterproof spray sells best the day before a rainy day" is clarified from sales data at the store 701.

In the extraction logic generation processing 743, an extraction logic is generated from the following viewpoints (A) to (C) as an example.

### (A) Commodities repeatedly purchased in the past

When actual sales results for each commodity are aggregated from a large amount of actual sales result data and customer data, for example, rearranged in a time series to perform ranking processing or the like, commodities repeatedly purchased in any period can be extracted every purchaser.

It is judged from data such as actual sales result data and customer data whether or not there is a number of times of purchase of a commodity at a predetermined frequency or more during a predetermined period based on data such as actual commodity purchase results, customer information, and commodity information for each customer in a store or a WEB site that performs electronic commerce, for example, to determine that the commodity is a commodity repeatedly purchased and determine that the commodity is a commodity that tends to be repeatedly purchased if there are actual results in which a specific customer has purchased a predetermined number or more of the commodities at a predetermined frequency or more during a predetermined period.

### (B) Commodity that tends to be purchased together with another commodity

When a combination of commodities simultaneously purchased for each customer is analyzed based on a large amount of actual sales result data rearranged in a time series, for example, the commodities can be extracted as a combination of a specific commodity that tends to be purchased together with another commodity and a commodity to be together purchased, for example. (C) A commodity that tends to be purchased even relatively alone.

The commodities can be extracted from a large amount of actual sales result data rearranged in a time series, for example.

As to the foregoing items (B) and (C), a sales growth rate is analyzed by aggregating the number of sales for each commodity, for example, from actual commodity purchase results and actual commodity browsing results, customer information, commodity information, and the like in a store or a WEB site that implements electronic commerce, a page view increase rate by counting a details page browsing of the commodity is analyzed, a single purchase rate, and a repeat purchase rate of the specific commodity, a simultaneous purchase rate, and the like are analyzed, whereby it can be determined that the commodity the numerical values are respectively predetermined values or more is a commodity having a specific tendency. The determined commodity, together with identifiers and rank values respectively representing its tendency and degree, is recorded and managed in the commodity management DB or a stock commodity management table for each nearest base extracted from the commodity management DB.

Each of logic determinations respectively illustrated in the foregoing items (A) to (C) is not always performed from a fixed viewpoint, but is generated from actual sales result data in the past, for example, and is appropriately determined by an alternative logic if it includes analysis extraction criteria along each of parameters (various types of items) of stock candidate commodities.

In the commodity automatic extraction 744, automatic extraction processing of commodities based on the generated extraction logic is performed. A commodity group automatically extracted is stored as stock candidate commodities in the stock candidate commodity DB or the table 750.

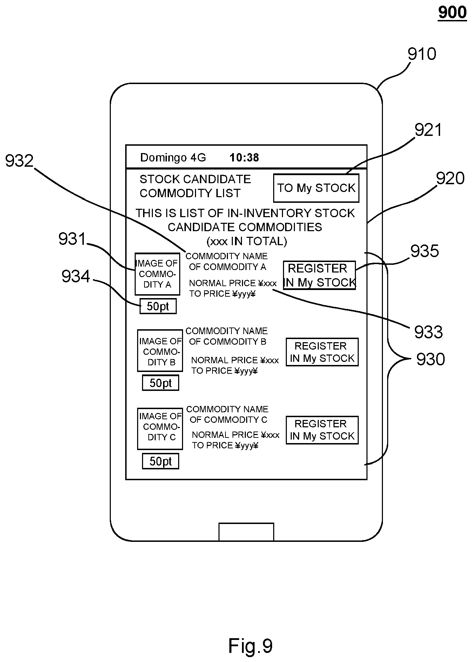

Then, an example of processing for registering a commodity desired to be stocked by a customer will be described in detail with reference to Figure 8 to Figure 9. Figure 8 illustrates a flowchart of stock commodity registration processing or update processing in the commodity delivery management system according to the embodiment of the present invention, and Figure 9 illustrates a display example on a customer terminal in the commodity delivery management system according to the embodiment of the present invention. An example of the processing illustrated in Figure 8 is an example of processing that does not prevent the registration request processing and/or the automatic registration processing illustrated in Figure 6 but can be performed in parallel or alternatively.

When processing is started in step S801 illustrated in Figure 8, the processing proceeds to step S802. In step S802, in-inventory stock candidate commodities are accepted in the front system 710 from the stock candidate commodity DB or the table 750.

Then, the processing proceeds to step S803. In step S803, in-inventory stock candidate commodity information is distributed to a user terminal by starting the commodity recommendation logic 711 or the like, for example, in the front system 710, whereby the candidate commodities are presented or recommended. In step S804, the presence or absence of a stock commodity narrowing-down request or a registration request from a customer on a user terminal is waited for. If the answer is No in step S804, the processing proceeds to step S803. In step S803, the processing ends as the flow (or the processing may be restored to step S804 as a request waiting). However, if the answer is Yes in step S804, the processing proceeds to step S805. In step S805, the stock candidate commodities are narrowed down, as needed, based on the registration request information requested from the customer. In step S806, processing for registering a commodity desired to be stocked, which has been requested from the customer, is performed. In step S807, the stock candidate commodity DB or the table 750 is updated based on the commodity desired to be stocked, which has been registered based on the request from the customer, the processing ends as the flow (step S808).

Figure 9 illustrates a display example of an information processing apparatus (a user or customer terminal) in the commodity delivery management system according to the embodiment of the present invention. In the same drawing, on a display 920 installed on a housing 910 in a terminal 900, a stock candidate commodity list 930 illustrated with reference to Figure 8, together with a message "this is a list of in-inventory stock candidate commodities (xxx in all)", is displayed. When information provided for a commodity A in the list 930 will be described, a commodity name 932, together with a commodity image 931, is presented and a normal price and a sales price 933 are also presented for the commodity A. A provided point 934 at the time of purchase is also presented.

Further, when a customer desires to register the commodity A as a stock commodity for the customer, a registration button 935 is provided such that the commodity A can be registered as "My stock". Commodity information registered in "My stock" by the customer can be confirmed upon shifting to a confirmation screen not illustrated when a button 921 denoted as "To My stock" in the same drawing is pressed (on a My stock configuration screen, respective edition buttons for switching between active and non-active registration states, deregistration (deletion), and the like, can also be provided, although not illustrated.

In Figure 9, it can be confirmed how respective information about a commodity B and a commodity C are provided, like the information about the commodity A.

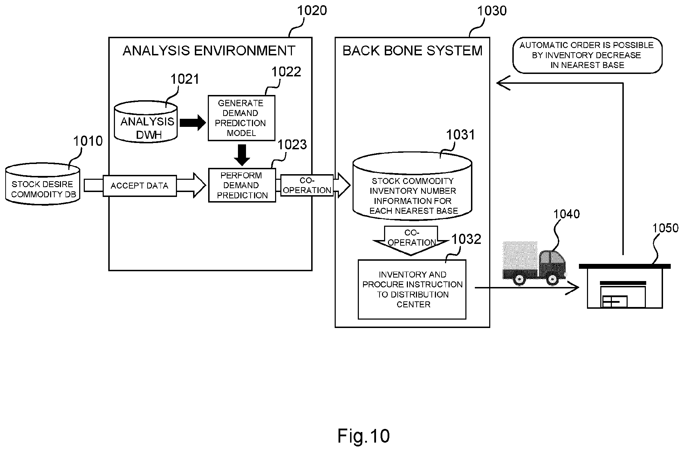

Accordingly, one feature of the present invention is that in electronic commerce in the commodity delivery management system according to the embodiment of the present invention, commodities can be confirmed upon presentation of in-inventory stock candidate commodities on the WEB site 702 directed toward the customer terminal and/or the terminal application 703 such as the customer terminal and the commodities desired to be stocked in a nearest base can be selected, registered, and edited from among the confirmed commodities. A mechanism for ensuring stock commodities in the nearest base will be described below with reference to Figure 10.

Figure 10 illustrates an analysis and distribution model in the commodity delivery management system according to the embodiment of the present invention. Particularly, a mechanism for ensuring stock commodities in a nearest base will be made clear by description in the same drawing. The mechanism for ensuring the stock commodities in the nearest base is roughly classified into three steps, described below.

### (STEP 1)

An inventory quantity of stock commodities for each nearest base is estimated based on information about commodities desired to be stocked for each nearest base. Specifically, a demand prediction model for estimating an inventory quantity of stock commodities to be ensured for each nearest base is generated based on data such as past actual purchase results, customer information, and commodity information, to estimate an inventory quantity for each of the stock commodities (the inventory quantity is also referred to as a regular quantity. The regular quantity is also referred to as a minimum necessary number of commodities to be always ensured in the nearest base).

### (STEP 2)

If the inventory quantity of the stock commodities for each nearest base is below the inventory quantity (regular quantity) estimated in STEP 1, as described above, an automatic order is placed with a backbone system from the nearest base to replenish the inventory.

### (STEP 3)

In the backbone system, the regular quantity for each stock commodity is managed for each nearest base estimated in STEP 1, and the automatic order placed in STEP 2 is processed, as needed, to instruct a distribution center to carry stock commodities into the nearest base (inventory and procure the stock commodities).

In Figure 10, a mechanism for ensuring stock commodities in a nearest base is implemented by a stock desire commodity database 1010 in which information about a group of commodities desired to be stocked, which have been collected from a customer, are integrated, an analysis environment 1020, and a backbone system 1030 (including a feedback from a base terminal in the nearest base, as needed).

In the same drawing, the information about a group of commodities desired to be stocked are accepted in the analysis environment 1020 from the stock desire commodity database 1010, and a demand prediction model is generated based on an analysis data warehouse 1021 within the analysis environment 1020 (1022). Demand prediction is performed (1023) based on the information and the model, and prediction information are transmitted to the backbone system 1030 and coordinated with one another within the backbone system 1030.

In the backbone system 1030, the demand prediction information transmitted from the analysis environment 1020 is considered, and stock commodity inventory quantity information table 1031 for each nearest base is checked, and is updated, as needed (the stock commodity inventory quantity information table 1031 is included in a stock commodity database for each nearest base or is derived and generated, as needed).

Then, in the backbone system 1030, an instruction to inventory and precure target commodities (1032) is sent to the distribution centers 11 to 13 based on the updated stock commodity inventory quantity information table 1031 (a nearest base to which the target commodities are to be procured is also designated for each target commodity). In the designated distribution centers 11 to 13, delivery (1040) is performed to inventory and procure the target commodities to the designated nearest base 1050.

At this time, in the embodiment of the present invention, it should be noted that the number of commodities to be inventoried and procured is estimated to be relatively larger than the number of commodities desired to be stocked, which are recorded in the stock desire commodity database 1010. Specifically, for the commodities desired to be stocked in the nearest base, if the total number of the commodities desired to be stocked is 500, the number of stock commodities to be inventoried and procured to the nearest base from the distribution center by the backbone system 1030 is adjusted such that the inventory quantity in the nearest base exceeds 500 (adjusted to increase by approximately several percents as an example).

On the other hand, the nearest base 1050 can also be configured such that an increase/decrease transition of each of stock commodities in inventory is managed and an automatic order is placed for the stock commodities the inventory quantity of which decreases to be below the regular quantity individually with the backbone system.

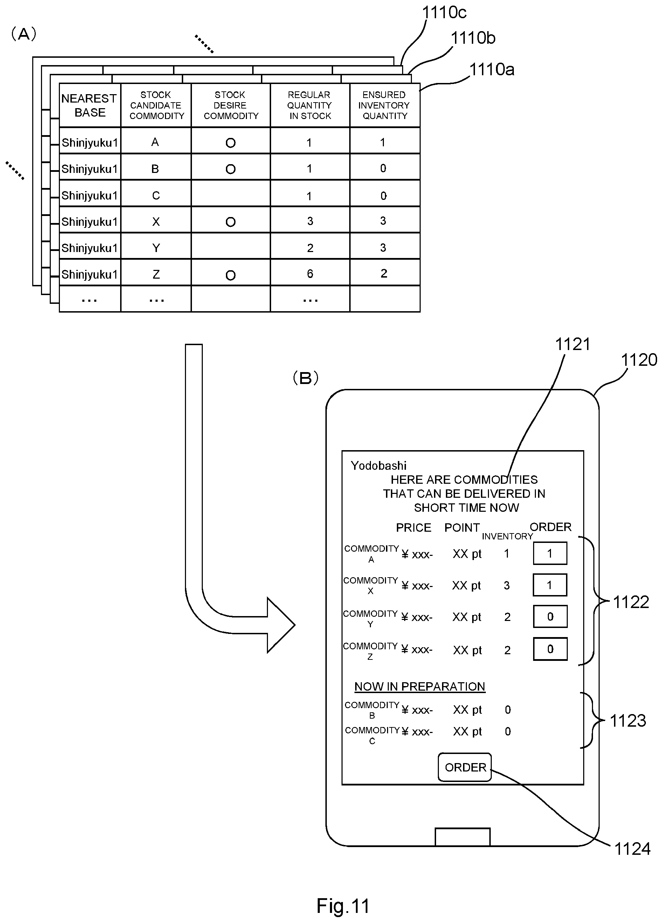

Figure 11 illustrates an example of a data table ((A) in the same drawing) derived or generated from a stock candidate commodity database, a stock desire commodity database, a customer management database, a commodity management database, an inventory management database, and the like in the commodity delivery management system according to the embodiment of the present invention and how information is provided onto a customer terminal (its screen) based on the table ((B) in the same drawing).

In Figure 11 (A), tables 1110a to 1110c in which relationships among stock candidate commodities, commodities desired to be stocked, a regular quantity in stock, and an ensured inventory quantity for each nearest base (further for each nearest base and for each customer, if necessary) are rearranged are illustrated by way of example (in Figure 11 (A), the table 1110a is a table in which the relationships are rearranged for customers in an area nearest to a nearest base (Shinjyuku 1) by way of example). Stock candidate commodities A, B, C, X, Y, and Z registered in the nearest base "Shinjyuku 1" are registered in the table 1110a, and the presence or absence of a stock desire demanded by a customer for each of the stock candidate commodities, a regular quantity in stock calculated based on respective desired numbers of stock commodities from the demand prediction model and the customer, and an inventory quantity ensured in the nearest base at the current time point referred to from the commodity management database, the inventory management database, and the like are stored.

For example, in the table 1110a, the stock candidate commodities A, B, X, and Z are recorded as being desired and required to be stocked from a customer (a flag is set as a "O" mark in Figure 11 (A)). When a regular quantity in stock for the stock candidate commodity A is set to "1", an inventory quantity "1" is just ensured in the nearest base.

In such a situation, an example of information displayed on a customer terminal having a customer's home within an area nearest to the nearest base "Shinjyuku 1" as an address is illustrated in Figure 11 (B). In Figure 11 (B), among the commodities A, B, X, and Z desired and requested to be stocked and registered in the stock candidate commodity group (A, B, C, X, Y, Z, ...) extracted for the nearest base "Shinjyuku 1", the commodities A, X, and Z the respective ensured inventory quantities of which are one or more and the commodity Y that has been picked up by automatic extraction not illustrated (the commodity also satisfies a condition under which an ensured inventory quantity is one or more), together with a message 1121 "here are commodities ready for immediate delivery in a short time", are presented in a presentation column 1122.

In the presentation column 1122, a commodity name (and a commodity image, if necessary), a price, a provided point at the time of purchase, and an inventory quantity are displayed for stock commodities that can be delivered to the customer in a short time by way of example. A number of orders (its initial value is set to zero and can be a set value that can be operated to increase or decrease by a customer or a user) is also displayed. In the same drawing, orders are respectively placed for the commodity A and the commodity B (this state is a temporary state until an order button 1124, described below, is pressed) by way of example.

In a presentation column 1123, the commodity B the inventory quantity of which is zero, although desired and required to be stocked by the customer and the commodity C picked up by automatic extraction not illustrated (note that the ensured inventory quantity is zero), together with a message "now in preparation", is presented.

The order button 1124 is a button in which order procedure processing is performed for commodities the number of orders of which is set to one or more when pressed after the number of orders of each of the commodities is set.

In the embodiment described with reference to Figure 11, only the commodities the inventory of which has been ensured in the nearest base are guided and presented as commodities that can be ordered among the commodities desired to be stocked, which have been selected and registered by the customer, as described above, and this point is one of features of the present invention.

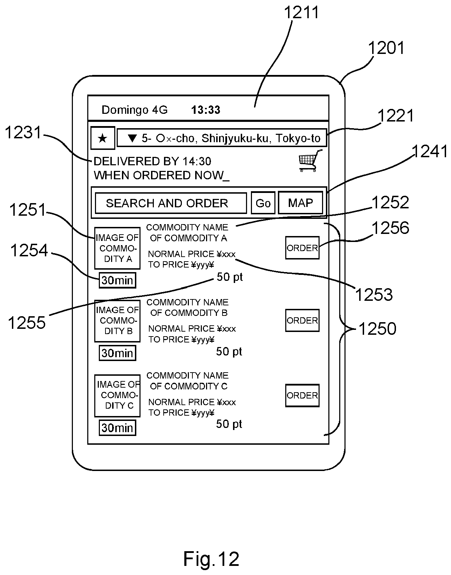

Figure 12 to Figure 14 respectively illustrate display examples of an information processing apparatus (user or customer terminal) in the commodity delivery management system according to the embodiment of the present invention. The display examples respectively illustrate variations of a mechanism for receiving an order for a stock commodity from a customer according to the embodiment of the present invention. In the order receiving mechanism, commodities are guided and an order can be received at various timings on respective screens of the WEB site 702 directed toward the customer terminal and the terminal application 703 such as the customer terminal. Examples of the scene include respective scenes in the following items (S1) to (S5).
(S1) When the customer accesses a WEB site directed toward a customer terminal or starts an application on the customer terminal, commodities are guided and an order is received. (S2) When the customer is attempting to purchase a commodity on the WEB site directed to the customer terminal or the terminal such as the customer terminal, commodities are guided as "commodities ready to immediate and together delivery" and an order is received. (S3) When an action history (a page view, a purchase pattern, etc.) of the customer is analyzed, to match predetermined action criteria, target stock commodities are guided and an order is received using a notification function of a smartphone application, for example. (S4) While a commodity is being delivered to the customer, commodities are guided and an additionally order is received as a commodity that can be together delivered. (S5) At the time of redelivery to be performed when the customer was absent, although the commodity has been delivered to the customer, commodities are guided as commodities that can be together delivered and an additional order is received.

Figure 12 illustrates an example of a screen of a customer terminal configured such that stock commodities are guided and an order can be received from a customer. In the same drawing, a header 1211 including a current time display, a display column 1221 in which a current address or a current location is displayed, a message 1231 "It will be delivered by 14:03 in an immediate order", and a search column 1241 are displayed on a screen of a customer terminal 1201, and a list of commodities that can be delivered to a customer's home in a short time (e.g., 30 minutes or one hour) is displayed in a commodity display column 1250. Although even commodities A to C are displayed in the same drawing, the present invention is not limited to this. More commodities can also be presented by scrolling means and page ejection means not illustrated. Narrowing-down based on a desired commodity genre or commodity category can also be performed by a search keyword or the like for the search column 1241.

As to a content of each of commodities to be displayed in the commodity display column 1250, a commodity name 1252, together with a commodity image 1251, is presented, and a normal price and a sales price 1253 are also presented for a commodity A by way of example. Further, an estimated arrival time 1254 for a case where the commodity A is ordered now is displayed. A provided point 1255 at the time of purchase is also presented.

When the customer desires to order the commodity A, the customer can shift the screen to an order procedure screen not illustrated, for example, by pressing an order button 1256 on the screen.

In Figure 12, it can be confirmed how respective information about a commodity B and a commodity C are provided, like the information about the commodity A.

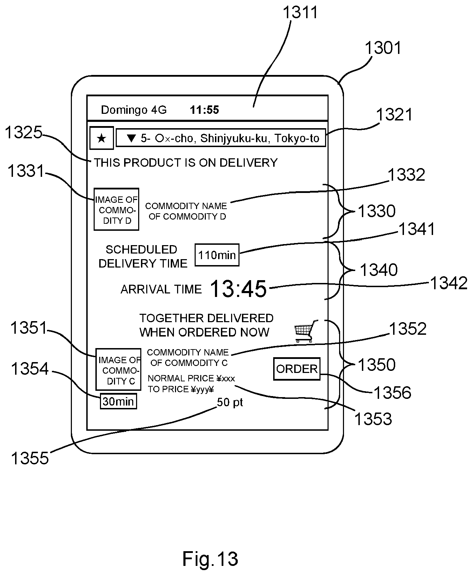

Figure 13 illustrates an example of a screen of a customer terminal configured such that while a commodity is being delivered to a customer, stock commodities are guided as commodities that can be together delivered and an additional order can be received from the customer. In Figure 13, a header 1311 including a current time display, a display column 1321 in which a current address or a current location of the customer is displayed, and a message 1325 "This product is on delivery" are displayed on a screen of a customer terminal 1301, and a commodity D that is being currently delivered is displayed in a commodity display column 1330.

A commodity name 1332, together with a commodity image 1331 of the commodity D, is presented by way of example in the commodity display column 1330, and a scheduled delivery time 1341 and an estimated arrival time 1342 of the commodity D are displayed in a communication column 1340 below the commodity display column 1330.

Further, in Figure 13, below the communication column 1340, a list of commodities that can be delivered to a customer's home in a short time (e.g., 30 minutes or one hour) when ordered at the current time point (11:55 now displayed on the screen in the same drawing) is displayed in a commodity display column 1350.

A content of each of the commodities to be displayed in the commodity display column 1350 is similar to the content of each of the commodities to be displayed in the commodity display column 1250 described with reference to Figure 12. However, it is noted that a commodity name 1352, together with a commodity image 1351, is presented and a normal price and a sales price 1353 are also presented for a commodity C by way of example. Further, an estimated arrival time 1354 for a case where the commodity C is ordered now is displayed. A provided point 1355 at the time of purchase is also presented.

When the customer desires to order the commodity A, the customer can shift the screen to an order procedure screen not illustrated, for example, by pressing an order button 1356 on the screen.

Although only the commodity C is displayed in the commodity display column 1350 in the same drawing, the present invention is not limited to this. More commodities can also be presented by scrolling means and page forward means not illustrated. Narrowing-down based on a desired commodity genre or commodity category can also be performed by inputting a search keyword or the like in a search column not illustrated in the same drawing.

By a transition button not illustrated, the screen illustrated in Figure 13 may be shifted to the screen illustrated in Figure 12.

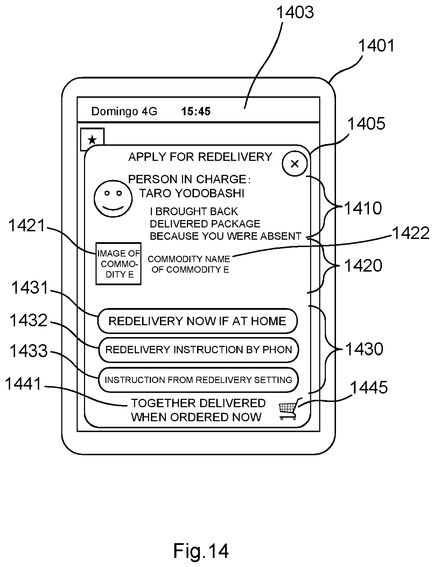

Figure 14 illustrates an example of a screen of a customer terminal configured such that at the time of applying for redelivery when a customer was absent, although a commodity has been delivered to the customer, stock commodities are guided as commodities that can be together delivered and an additional order can be received from a customer. In the same drawing, although a header 1403 including a current time display is displayed on a screen of a customer terminal 1401, a redelivery application screen 1405 is displayed in a form to be popped up on a screen including the header 1403.

On the redelivery application screen 1405, there is a guidance column 1410 including a name of a person in charge of delivery and a message "I brought back product because you were absent" by way of example, and a commodity display column 1420 of a commodity to be delivered is arranged below the redelivery application screen 1405. In the commodity display column 1420, a commodity name 1422, together with a commodity image 1421 of a commodity E, is presented by way of example.

In Figure 14, a redelivery instruction column 1430 is arranged below the commodity display column 1420, and three instruction buttons 1431 to 1433 are arranged in the same column 1430. Specifically, the instruction button 1431 is an instruction button for issuing a redelivery instruction right now while a customer is currently at home, and the instruction button 1432 is an instruction button for issuing a redelivery instruction by phone.

The instruction button 1433 is an instruction button for issuing a redelivery instruction according to redelivery setting (a content set on the screen). When the button is pressed, the screen can be shifted to a redelivery setting screen not illustrated by way of example.

In a lowermost column illustrated in Figure 14, a guidance 1441 of a list of commodities that can be together delivered to the customer's home in a short time (e.g., 30 minutes or one hour) at the time of redelivery when ordered at the current time point (15:45 now when the screen in the same drawing is displayed) is presented. In the same drawing, a commodity list (e.g., the list illustrated in Figure 12) is presented by a scroll button not illustrated, or the screen can be shifted to the screen illustrated in Figure 12 by pressing a screen transition icon 1445.

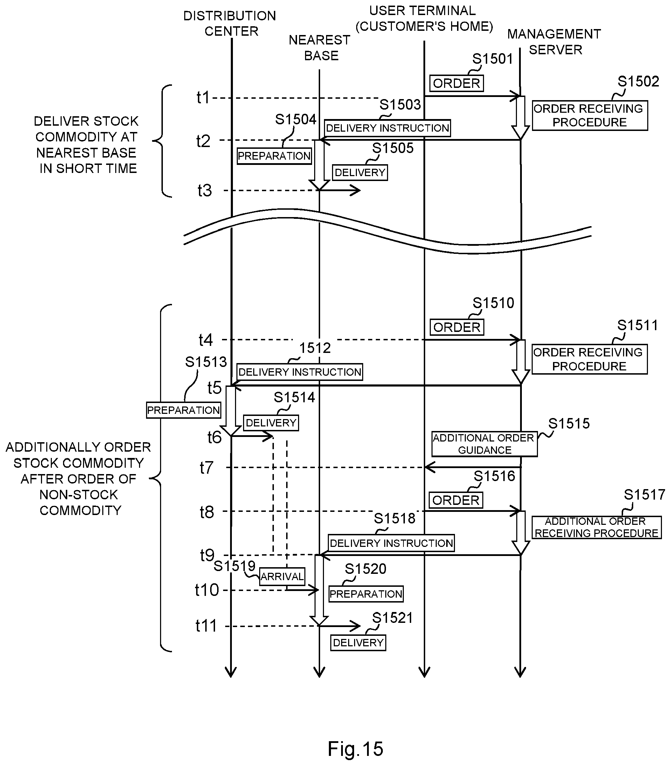

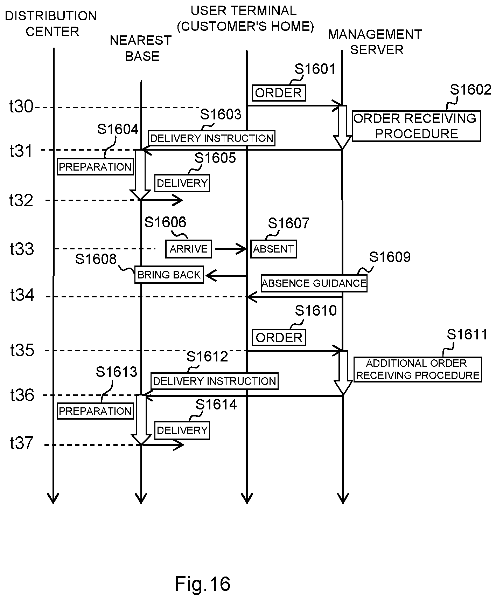

Figure 15 and Figure 16 respectively illustrate processing operation flows in the commodity delivery management system according to the embodiment of the present invention. The respective operation flows illustrated in Figure 15 and Figure 16 illustrate order receiving/delivery variations that can be implemented by building a specific "nearest base" in the embodiment of the present invention. Figure 15 illustrates how a stock commodity inventoried in a nearest base can be delivered in a short time (a flow from a time t1 to a time t3 in the same drawing) and how a non-stock commodity ordered by a customer is shipped from a distribution center, an additional order of a stock commodity inventoried in the nearest base at any time is received if the non-stock commodity has not yet passed through the nearest base including a customer's home as a nearest area, and the stock commodity, together with the non-stock commodity previously ordered, is delivered (a flow from a time t4 to a time t11 in the same drawing).

Figure 16 illustrates, when a stock commodity delivered from the nearest base is redelivered because of absence or the like, how an additional order of another stock commodity is received and the stock commodities can be together delivered (a flow at a time t33 and subsequent times in the same drawing).

### [Scene in Which Stock Commodity in Nearest Base is Delivered in Short Time]

At the time t1 illustrated in Figure 15, an order for a stock commodity is placed with the management server 21 in the commodity delivery management system from a user terminal (customer terminal) at a customer's home (step S1501), an order receiving procedure is performed in the management server 21 (step S1502), and an instruction to deliver the ordered stock commodity to a base terminal in a nearest base is issued at the time t2 (step S1503).

The base terminal in the nearest base that has received the delivery instruction issues a shipment preparation instruction, shipment preparation in the nearest base is made at the time t2 to the time t3 (step S1504), and the ordered stock commodity is delivered toward the customer's home at the time t3 (S1505).

### [Scene in Which Additional Order for Stock Commodity is Received After Non-stock Commodity is Ordered]

At the time t4 illustrated in Figure 15, an order for a non-stock commodity is placed with the management server 21 in the commodity delivery management system from the user terminal (customer terminal) at the customer's home (step S1510). The non-stock commodity may be delivered to the customer's home from a distribution center via the nearest base in the present embodiment, and the currently ordered product is scheduled to be shipped from the distribution center. An order receiving procedure is performed in the management server 21 from the time t4 to a time t5 (step S1511), and an instruction to deliver the ordered non-stock commodity is issued to a base terminal of the distribution center at the time t5 (step S1512).

The base terminal of the distribution center that has received the delivery instruction issues a shipment preparation instruction, a shipment preparation at the distribution center is performed from the time t5 to a time t6 (step S1513), and the ordered non-stock commodity is delivered toward the nearest base at the time t6 (S1514).

Although the non-stock commodity shipped toward the nearest base from the distribution center at the time t6 arrives at a time t10, as illustrated in the same drawing, a processing operation then described is performed during that time.

At a time t7, a notification that the ordered non-stock commodity has just been shipped is made, and a guidance of additional order receiving is transmitted toward the user terminal (customer terminal) from the management server 21 (step S1515). As the guidance, the guidance described with reference to Figure 13 is favorably performed.

Then, at a time t8, an additional order for a stock commodity is placed with the management server 21 from the user terminal (customer terminal) via a guidance screen described with reference to Figure 13 (step S1516). In the management server 21, an additional order receiving procedure is performed (step S1517), and an instruction to delivery the stock commodity additionally ordered is issued to the base terminal of the nearest base at a time t9 (step S1518).

At this time point, the non-stock commodity shipped from the distribution center at the time t6 has not arrived at the nearest base. In the nearest base, a shipment preparation of the stock commodity the delivery of which has been designated is made from the time t9 to the time t11 (step S1520).

At the time t10 while the shipment preparation of the stock commodity is being made in the nearest base, the non-stock commodity shipped from the distribution center arrives at the nearest base (step S1519). In the nearest base, together packaging work of the non-stock commodity that have arrived and the stock commodity is performed.

Finally, the non-stock commodity and the stock commodity that have been together packaged are shipped toward the customer's home from the nearest base at the time t11 (step S1521).

### [Scene in Which When Stock Commodity is Redelivered from Nearest Base, Additional Order for Another Stock Commodity is Received]

At a time t30 illustrated in Figure 16, when an order for a stock commodity is placed with the management server 21 in the commodity delivery management system from a user terminal (customer terminal) at a customer's home (step S1601), an order receiving procedure is performed in the management server 21 (step S1602), and an instruction to deliver the ordered stock commodity is issued to the base terminal in the nearest base at a time t31 (step S1603).

The base terminal of the nearest base that has received the delivery instruction issues a shipment preparation instruction, a shipment preparation in the nearest base is made at the time t31 to a time t32 (step S1604), and the ordered stock commodity is delivered toward the customer's home at the time t32 (S1605).

At a time t33, the stock commodity shipped from the nearest base arrives at the customer's home (step S1606). However, a delivery notice is left in a mailbox because a customer is absent (step S1607), and the stock commodity is brought back once to the nearest base (step S1608).

At a time t34, a guidance for receiving an additional order, together with an absence guidance, is transmitted to the customer terminal from the management server 21 (step S1609). As the guidance, the guidance described with reference to Figure 14 is favorably performed.

Then, at a time t35, an additional order for the other stock commodity is placed with the management server 21 from the user terminal (customer terminal) via the guidance screen described with reference to Figure 14 (step S1610). In the management server 21, an additional order receiving procedure is performed (step S1611), and an instruction to delivery the other stock commodity additionally ordered is issued to the base terminal of the nearest base at a time t36 (step S1612). By this time, the stock commodity brought back has arrived at the nearest base. In the nearest base, a together packaging shipment preparation of the stock commodity brought back and the other stock commodity the delivery of which has been designated by the additional order is performed (step S1613).

At a time t37, the stock commodities together packaged are shipped toward the customer's home from the nearest base (step S1614).

To implement a variation of order receiving/delivery described with reference to Figure 15 and Figure 16, an inventory quantity for each commodity in each base, a delivery time period between bases, and a delivery time period to a customer's home are managed, are calculated again each time, and are updated and controlled on a backbone system. The commodity is tracked after shipment from the base, a current location of the commodity that is being delivered is updated and managed, and a scheduled arrival time is calculated again, and is appropriately notified to a customer terminal and a movement terminal of a deliverer according to the additional order or change of the content of the order.

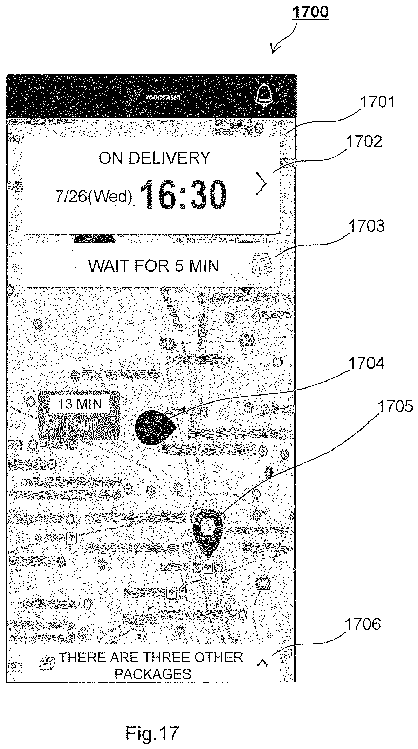

Then, referring to Figure 17 to Figure 23, screens of a customer terminal along a delivery process in the commodity delivery management system according to the embodiment of the present invention will be described, to illustrate a further feature of an operation of the commodity delivery management system according to the embodiment of the present invention that controls the screens.

Figure 17 illustrates an example of a screen of a customer terminal as a modification of the screen illustrated in Figure 13. It is noted that although the present invention is not limited to determination whether or not a commodity to be delivered is a "stock commodity" (i.e., application of a "normal commodity" that does not necessarily require a discrimination between a "stock commodity" and a "non-stock commodity" to a delivery time is not excluded) has already been described even in the description with reference to Figure 13, the present invention is not limited to determination whether or not the commodity to be delivered is a "stock commodity" (the same applies hereinafter).

On a screen 1700 illustrated in Figure 17, a map 1701 around a current location of a commodity to be delivered that is currently being delivered is displayed, and a box 1702 in which a message "On delivery" and a current date (07/26 (Wed) 16:30) is displayed. A scheduled delivery (arrival) date or time may be displayed instead of the current date.

1704 represents a current location of the commodity to be delivered, and 1705 represents a position of a delivery destination of the commodity. In the same drawing, a distance (1.5 km) to the delivery destination and an estimated arrival time period (13 minutes) are displayed.

Note that as one feature of the present invention, an instruction box 1703 for issuing an instruction to make the commodity arrive a predetermined time period (five minutes, ten minutes, 30 minutes, etc.) behind schedule is displayed.

In the embodiment of the present invention, the instruction box 1703 can be displayed at the time of a guidance immediately before completion of delivery. In the embodiment of the present invention, in the instruction box 1703, time periods other than the illustrated time "5 min" ("10 min", "30 min", etc., as an example) can also be displayed to be selectable.

If an instruction is issued from the instruction box 1703, the instruction can be issued by turning on a check box as illustrated in the box 1703 or using other means (pressing other instruction buttons or the like not illustrated) as an example.

Accordingly, there is an advantage in that when the commodity is delivered after waiting a predetermined time period from the scheduled arrival time by the instruction box 1703, a receiver may not panic immediately after taking a bath or before taking a bath, for example, even while currently at home.

A notice box 1706 indicating that to the same customer to which the commodity is to be currently delivered, there is another commodity scheduled to be delivered is illustrated in a lowermost column of the screen 1700. The "other commodity scheduled to be delivered" may be conveyed by the same delivery as the commodity that is being currently delivered, or may be sent by separate delivery at a later date because it has just been charged.

In the embodiment of the present invention, the customer can display its details on a screen or the like not illustrated by pressing a check button on the notice box 1706. When the customer desires to receive the commodity together with the commodity that is being currently conveyed by separate delivery (later delivery), the customer can issue an instruction to together receive the commodities (such delivery is referred to as "collective delivery", "together delivery", etc., for convenience).

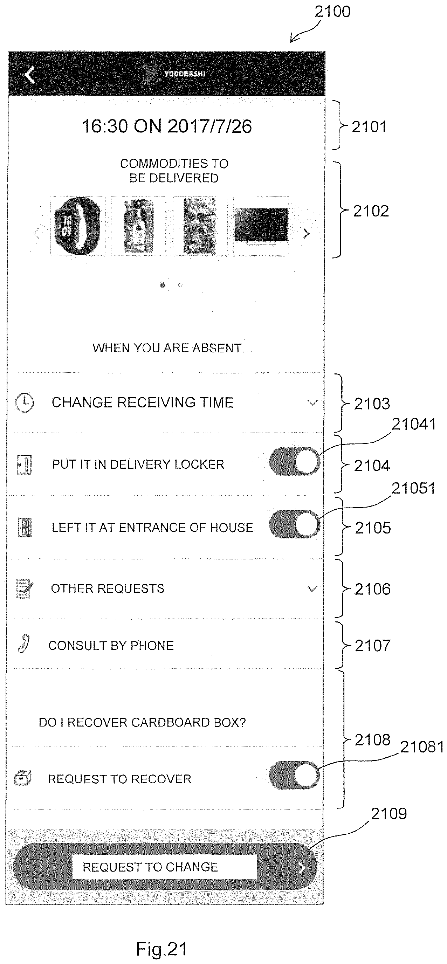

In the embodiment of the present invention, when the customer desires (issues an instruction) to select "collective delivery", the screen can be shifted to a details instruction screen (Figure 21, etc. described below) of a delivery method to match the latest one of respective deliveries of the "other commodities scheduled to be delivered".

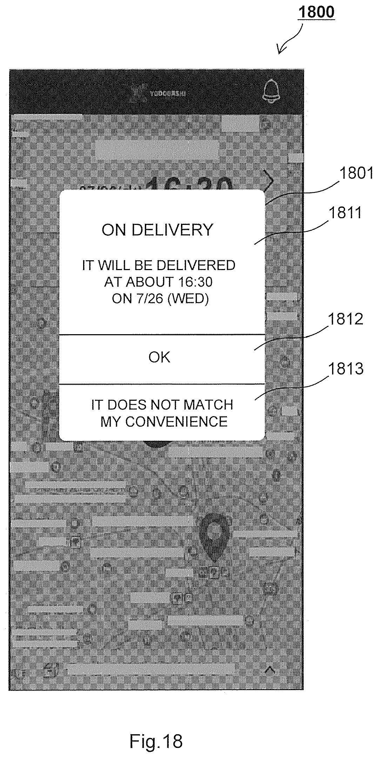

Figure 18 illustrates how a pop-up notification to be displayed at any timing is made after the screen 1700 is displayed. As illustrated, a pop-up 1801 is displayed on a screen 1800, and a notification column 1811 indicating that a commodity is being currently delivered and a scheduled arrival date, a button 1812 to be pressed when this is accepted, and a button 1813 to be pressed when a notification content does not match a convenience (i.e., delivery designation is performed by a transition to another screen or the like).

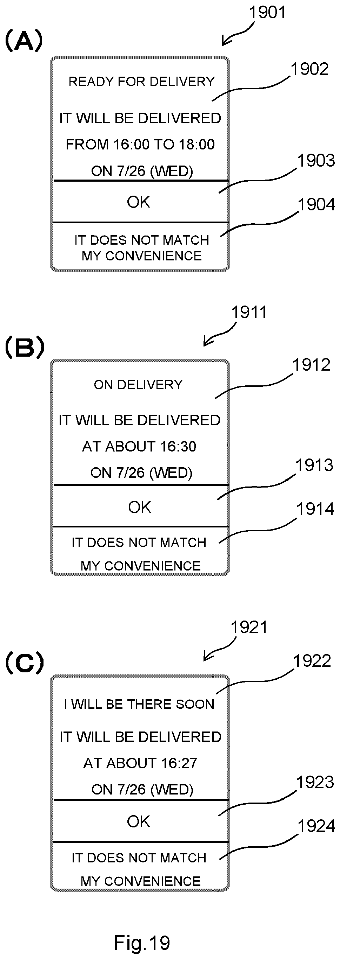

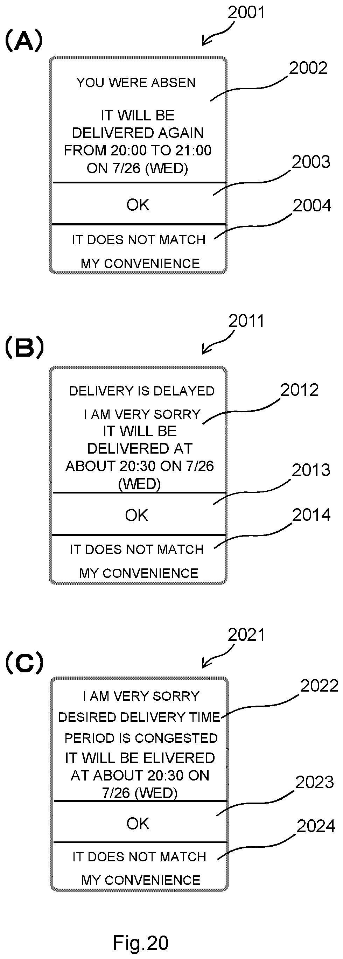

Figure 19 (A) to Figure 19 (C) and Figure 20 (A) to Figure 20 (C) respectively illustrate variations of the pop-up 1801 illustrated in Figure 18. That is, the pop-up 1801 is displayed at any timing after the screen 1700 is displayed (immediately after the screen 1700 is displayed as an example). However, the variations illustrated in Figure 19 and Figure 20 are respectively displayed in other specific scenes.

Figure 19 (A) illustrates a pop-up notification at a time point where a commodity is ready for delivery. In a pop-up 1901, a notification column 1902 in which a message indicating that a commodity is ready for delivery and a scheduled arrival date are displayed, a button 1903 to be pressed when this is accepted, and a button 1904 to be pressed when a notification content does not match a convenience are illustrated.

In the embodiment of the present invention, the pop-up 1901 can be notified in many scenes in steps S1505, S1521, S1605, S1614, etc.

Figure 19 (B) is similar to the pop-up 1801 illustrated in Figure 18. 1911, 1912, 1913, and 1914 respectively correspond to 1801, 1811, 1812, and 1813.

Figure 19 (C) illustrates a pop-up notification immediately before a commodity arrives at a delivery destination (one to several minutes before as an example). In a pop-up 1921, a notification column 1922 in which a message indicating that a commodity will arrive before long and a scheduled arrival date are displayed, a button 1923 to be pressed when this is accepted, and a button 1924 to be pressed when a notification content does not match a convenience are illustrated.

Figure 20 (A) illustrates a pop-up notification when a customer was absent, although a delivery destination has been arrived at. In a pop-up 2001, a notification column 2002 in which a message indicating that a customer was absent, although a delivery destination has been arrived at and a scheduled redelivery date are displayed, a button 2003 to be pressed when this is accepted, and a button 2004 to be pressed when a notification content does not match a convenience are illustrated.

In the embodiment of the present invention, the pop-up 2001 can be notified by the scene in step S1609 or the like as an example.

Figure 20 (B) illustrates a pop-up notification when a traffic congestion or the like has occurred while a commodity is being delivered. In a pop-up 2011, a notification column 2012 in which a message indicating that a traffic congestion has occurred while a commodity is being delivered and a scheduled delivery date at the current time point are displayed, a button 2013 to be pressed when this is accepted, and a button 2014 to be pressed when a notification content does not match a convenience are illustrated.

In the embodiment of the present invention, the pop-up 2011 can be notified by many scenes during commodity delivery.

Figure 20 (C) illustrates a pop-up notification when a delivery date has been designated and when a delivery source or the like has been congested, for example. In a pop-up 2021, a notification column 2022 in which a message indicating that a delivery date has been designated and a delivery source or the like has been congested and a scheduled delivery date at the current time point are displayed, a button 2023 to be pressed when this is accepted, and a button 2024 to be pressed when a notification content does not match a convenience are illustrated.

In the embodiment of the present invention, the pop-up 2021 can be notified when a delivery source or the like is congested, for example.

Figure 21 illustrates an example of a details instruction screen of a commodity delivery method in the embodiment of the present invention. In the embodiment of the present invention, a screen 2100 can be shifted from many screens such as the notification box 1706 illustrated in Figure 17, the button 1813 illustrated in Figure 18, the buttons 1904, 1914, and 1924 illustrated in Figure 19, and the buttons 2004, 2014, and 2024 illustrated in Figure 20, for example, in addition to being shifted from a home screen of an application not illustrated.

As illustrated, on the screen 2100, a current date display column 2101, a commodity display column 2102 of commodities currently scheduled to be delivered to a customer (the display column is configured to be scrollable leftward and rightward and many commodities can be confirmed by scrolling by way of example. The display column can also be shifted to a commodity description column not illustrated by pressing each of commodity icons, for example), and instruction columns 2103 to 2108 to be used when a customer is absent are illustrated.

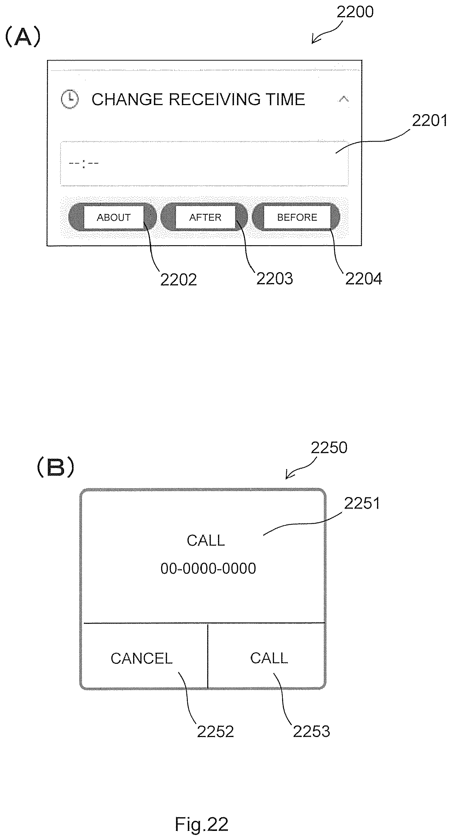

The instruction column 2103 is an instruction column to be used when an instruction to change a receiving time period (including a date) is issued. When the receiving time period is changed, the instruction column 2103 (any position of the instruction column 2103, a mark in a right column as an example of a case where a designated position is provided within the same column) is tapped, to display a time designation screen or a pop-up screen as illustrated in Figure 22 (A) and designate the time period. The instruction column 2103 may also designate the date.

The instruction column 2104 is a column that can be used by a customer having a home-delivery box. If a commodity may be placed in the home-delivery box when the customer is absent (if hand delivery is not required), the switch 21041 in the same column is turned on (it is a design matter and is indifferent which of left and right positions is ON. The same applies hereinafter).

The instruction column 2105 is a column to be used by a customer who may have a commodity left at an entrance of a house when absent. If the customer may have the commodity left at the entrance of the house when absent, a switch 21051 in the same column is turned on.

In another embodiment of the present invention, when the switch 21051 in the same column is turned on, and a deliverer has left a commodity to be delivered at an entrance of a house of a customer at a delivery destination, the deliverer can shoot a place where the commodity has been left to transmit an image obtained by the shooting to a terminal of the customer.

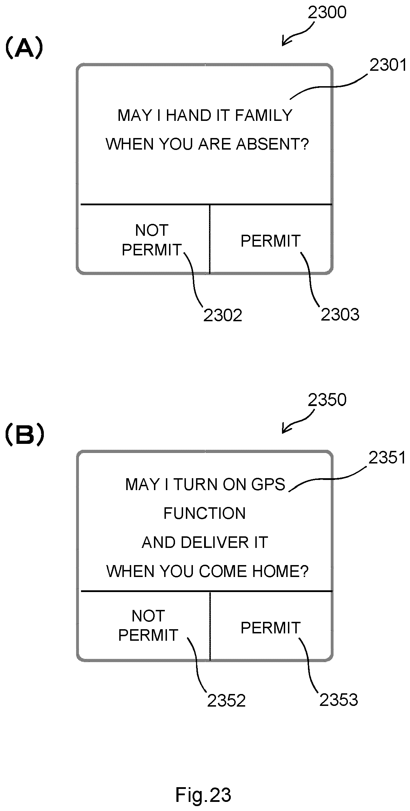

The instruction column 2106 is a column to be used when there is another requirement. The foregoing will be specifically described below with reference to Figure 23.

The instruction column 2107 is a column to be mainly used when a customer directly consults with a deliverer associated with a commodity to be delivered (typically, a deliverer who is delivering the commodity) by phone or the like (including a chat in addition to the phone). If the instruction column 2107 is used, the column is tapped, to shift the column to a screen (Figure 22 (B)), described below or pop up the same type of screen.

The instruction column 2108 is a column for issuing an instruction as to whether or not a packaging container (a cardboard box as an example) used at the time of current or previous commodity conveyance is recovered. If the recovery is required, a switch 21081 in the same column is turned on. For a commodity packaged in a packaging container that can be recovered this time and delivered, the packaging container that has been designated to be recovered is recovered (brought back) after the delivery.

In another embodiment of the present invention, a predetermined packaging container used at the time of previous commodity conveyance and placed at an entrance of a house is recovered at the above-described timing.

When a details instruction as to a commodity delivery method is ended, a change request can be confirmed by pressing a change request (change confirmation) button 2109. A changed requirement is transmitted to the management server 21 as an example, and is reflected on commodity delivery management.

In the embodiment of the present invention, after the button 2109 is pressed, only change requirements may be listed, pop-up displayed, and configured to make confirmation by an OK button (confirmation button).

Figure 22 (A) illustrates an example of a delivery time change designation screen in the embodiment of the present invention. In the embodiment, when an instruction operation for the designation column 2103 illustrated in Figure 21 has been performed, the designation column 2103 is shifted to the delivery time change designation screen, or is pop-up displayed, for example.

On a screen 2200, a time input column 2201 and auxiliary input buttons 2202 to 2204 for an input time are illustrated.

The auxiliary input button 2202 is a button for issuing an instruction to perform delivery at a time (about) inputted to the time input column 2201. When the button is pressed, an instruction to desire delivery in a range of predetermined time periods (e.g., five minutes or 10 minutes) before and after the time inputted to the time input column 2201 is issued.

The auxiliary input button 2203 is a button for issuing an instruction to perform delivery at a time (after) inputted to the time input column 2201. When the button is pressed, an instruction to desire delivery after the time inputted to the time input column 2201 is issued. When the button is pressed, control can also be performed such that a time input column "before" for indicating by what time delivery is desired at the latest is automatically displayed or switched.

The auxiliary input button 2204 is a button for issuing an instruction to perform delivery at the time (before) inputted to the time input column 2201. When the button is pressed, an instruction to desire delivery by the time inputted to the time input column 2201 is issued.

The auxiliary input buttons 2202 and 2204 are pressed, and a time period within the same delivery is designated, control can also be performed to promote direct consultation by phone with a delivery window, a delivery person, or the like by displaying a screen (not illustrated) "Consult by phone".

Figure 22 (B) illustrates an example of a calling screen for directly communicating with a delivery window, a delivery person, or the like in the embodiment of the present invention. In the embodiment, when an instruction operation for the designation column 2107 illustrated in Figure 21 has been performed, the designation column 2107 is shifted to the calling screen, or is pop-up displayed, for example.

On a screen 2250, a comment column 2251, a cancel button 2252, and a calling button 2253 are illustrated.

In the comment column 2251, a communication destination with a window person or a delivery person associated with a commodity is displayed, and it is indicated that calling to the communication destination is possible.

The cancel button 2252 is a button to be pressed when calling is canceled. When the button is pressed, the calling is canceled, and the screen 2250 is shifted to another screen.

The calling button 2253 is a button for performing calling. When the button is pressed, calling to a communication destination displayed in the comment column 2251 is performed.

Although the foregoing has been described on the premise that calling by phone is performed on the screen 2250, a communication method to a person in charge at a window or a person in charge of delivery is not limited to the phone, but may be messaging such as a chat.

Figure 23 (A) and Figure 23 (B) respectively illustrate examples of a customer terminal screen representing variations of a delivery instruction in the embodiment of the present invention. In the embodiment, when an instruction operation for the designation column 2106 illustrated in Figure 21 has been performed, the designation column 2106 is shifted to the customer terminal screen, or is pop-up displayed, for example.

In Figure 23 (A), a comment column 2301, a non-permission button 2302, and a permission button 2303 are illustrated on a screen 2300.

In the comment column 2301, a message for inquiring, when only a customer himself or herself is absent, although someone is at home at a delivery destination (i.e., a family of the customer is at home), whether or not a commodity may be delivered to a person at home other than the customer, is displayed.

The non-permission button 2302 is a button to be pressed when permission is not given to the above-described inquiry. When the button is pressed, the non-permission of the inquiry is transmitted to the management server 21 or the like, and is recorded and managed as a customer's desire.

The permission button 2303 is a button to be pressed when permission is given to the above-described inquiry. When the button is pressed, the permission of the inquiry is transmitted to the management server 21 or the like, and is recorded and managed as a customer's desire.

In the embodiment of the present invention, a content inputted to the screen 2300 is recorded and managed in the management server 21 or the like, and a commodity is handled to meet a customer's desire at the time of delivery of the commodity.

In Figure 23 (B), a comment column 2351, a non-permission button 2352, and a permission button 2353 are illustrated on a screen 2350.

In the comment column 2351, a message for inquiring whether or not a commodity may be delivered by turning on a GPS function of a customer terminal and waiting for a timing at which a customer comes home is displayed. In this case, a home destination (an address or a position) of the customer is previously registered in the management server 21 or the like.

The non-permission button 2352 is a button to be pressed when permission is not given to the above-described inquiry. When the button is pressed, the non-permission of the inquiry is transmitted to the management server 21 or the like, and is recorded and managed as a customer's desire.

The permission button 2353 is a button to be pressed when permission is given to the above-described inquiry. When the button is pressed, the permission of the inquiry is transmitted to the management server 21 or the like, and is recorded and managed as a customer's desire.

In the embodiment of the present invention, a content inputted to the screen 2350 is recorded and managed in the management server 21 or the like, and a commodity is handled to meet a customer's desire at the time of delivery of the commodity. More specifically, when the permission button 2353 is pressed and a customer's desire indicating the permission of the inquiry is recorded and managed, the GPS function of the customer terminal is controlled to be turned on by the management server 21 or the like under commission from the customer, to start to track a current position of the customer via the customer terminal, and performs an adjustment on the delivery side, when there is a commodity to be delivered to the customer's home, such that the commodity can be delivered immediately before or when the customer comes home or immediately after the customer comes home.

Although the embodiment of the commodity delivery management system or the like has been described above based on specific examples, an implementation as a recording medium having a program recorded thereon (an optical disk, a magneto-optical disk, a CD-ROM, a CD-R, a CD-RW, a magnetic tape, a hard disk, or a memory card as an example), for example, in addition to a method or a program for implementing a system or an apparatus can be taken as the embodiment of the present invention.

The embodiment of the program is not limited to an application program such as an object code to be compiled by a complier and a program code to be executed by an interpreter, but may be a form of a program module or the like to be incorporated into an operating system.

Further, the program can also be configured such that all processes need not necessarily be performed in only a CPU on a control substrate but some or all of the processes are performed by another processing unit (a DSP, etc.) mounted on an extension board or an extension unit added to the substrate, as needed.

All of constitutional requirements described in the present specification (including the claims, the abstract, and the drawings) and/or all steps in disclosed methods or processes can be combined in any combination excluding a combination in which these features are mutually exclusive.

Each of the features described in the present specification (including the claims, the abstract, and the drawings) can be replaced with an alternative feature serving an identical purpose, the same purpose, or a similar purpose unless otherwise clearly contradicted. Therefore, each of the disclosed features is only an example of a series of same or equivalent comprehensive features unless otherwise clearly contradicted.

The present invention is not limited to any of the respective specific configurations of the above-described embodiments. The present invention can be extended to all of new features described in the present specification (including the claims, the abstract, and the drawings) or their combinations or steps of all described new methods or processes or their combinations.

### [Reference Signs List]

10 Commodity delivery management system (as a part of distribution system)
11 to 13 Distribution center
14 to 16 Nearest base
141 to 142, 151 to 153, 162 to 165, 199 Customer's home
20 Commodity delivery management system
21 Management server
22 Tablet terminal (one form of user terminal apparatus)
23 Mobile phone (one form of user terminal apparatus)
24 to 26 PC (one form of user terminal apparatus or base terminal)
27 to 28 POS terminal (one form of base terminal or movement terminal at time of delivery)
37, 38 Communication line
39 Public line (dedicated line, Internet, etc.)

## Claims

1. A commodity delivery management system comprising a management server that manages shipment of a commodity to a customer's home from one or more bases, wherein
the management server comprises
a front end for performing electronic commerce of the commodity by an order from a customer terminal of the customer's home, and
when the commodity is ordered from the customer terminal via the front end, the ordered commodity is shipped from the base, and the commodity is delivered to the customer's home,
notifies the customer terminal of a scheduled arrival time of the commodity at the customer's home, and
receives an instruction to deliver the commodity after a delay of a predetermined time period from the scheduled arrival time from the customer terminal that has received the notification and manages the instruction.

2. A commodity delivery management system comprising a management server that manages shipment of a commodity to a customer's home from one or more bases, wherein
the management server comprises
a front end for performing electronic commerce of the commodity by an order from a customer terminal of the customer's home, and
when the commodity is ordered from the customer terminal via the front end, the ordered commodity is shipped from the base, and the commodity is delivered to the customer's home, performs processing for either
(1) inquiring of the customer terminal, when a customer is absent and a person other than the customer is present at the customer's home, whether or not the commodity may be delivered to the person other than the customer or
(2) inquiring of the customer terminal whether or not the commodity may be delivered to the customer's home immediately before or when the customer comes home or immediately after the customer comes home, to receive and manage an instruction from the customer terminal that has received either one of the inquiries.

3. A program to be executed on a commodity delivery management system comprising a management server that manages shipment of a commodity to a customer's home from one or more bases, wherein when the program is executed on the system, the program causes the management server to perform
a step of performing electronic commerce of the commodity by an order from a customer terminal of the customer's home via a front end, and
when the commodity is ordered from the customer terminal via the front end, the ordered commodity is shipped from the base, and the commodity is delivered to the customer's home,
a step of notifying the customer terminal of a scheduled arrival time of the commodity at the customer's home, and
a step of receiving and managing an instruction to deliver the commodity after a delay of a predetermined time period from the scheduled arrival time, which has been issued from the customer terminal that has received the notification.

4. A program to be executed on a commodity delivery management system comprising a management server that manages shipment of a commodity to a customer's home from one or more bases, wherein when the program is executed on the system, the program causes the management server to perform
a step of performing electronic commerce of the commodity by an order from a customer terminal of the customer's home via a front end, and
when the commodity is ordered from the customer terminal via the front end, the ordered commodity is shipped from the base, and the commodity is delivered to the customer's home,
a step of performing either
(1) a step of inquiring of the customer terminal, when a customer is absent and a person other than the customer is present at the customer's home, whether or not the commodity may be delivered to the person other than the customer or
(2) a step of inquiring of the customer terminal whether or not the commodity may be delivered to the customer's home immediately before or when the customer comes home or immediately after the customer comes home, to receive and manage an instruction from the customer terminal that has received either one of the inquiries.
